(19) Europäisches Patentamt

European Patent Office

Office européen des brevets

(11) **EP 1 687 955 B1**

(12) **EUROPEAN PATENT SPECIFICATION**

(45) Date of publication and mention
of the grant of the patent:
**04.07.2007 Bulletin 2007/27**

(21) Application number: **04817551.7**

(22) Date of filing: **24.11.2004**

(51) Int Cl.:
**H04L 29/06** *(2006.01)*

(86) International application number:
**PCT/EP2004/013342**

(87) International publication number:
**WO 2005/050945 (02.06.2005 Gazette 2005/22)**

(54) **FEEDBACK PROVISION USING GENERAL NACK REPORT BLOCKS AND LOSS RLE REPORT BLOCKS**

BEREITSTELLEN EINER RÜCKMELDUNG UNTER VERWENDUNG VON GENERAL NACK-REPORT-BLOCKS AND LOSS-RLE-REPORT BLOCKS

PREVISION DE MESSAGES EN RETOUR UTILISANT DES BLOCS GENERAUX DE SIGNALEMENT D'AR NEGATIFS ET DES BLOCS DE SIGNALEMENT DE PERTES RLE

(84) Designated Contracting States:
**DE FR GB**

(30) Priority: **24.11.2003 EP 03026879**

(43) Date of publication of application:
**09.08.2006 Bulletin 2006/32**

(60) Divisional application:
**07108447.9**

(73) Proprietor: **MATSUSHITA ELECTRIC INDUSTRIAL CO., LTD**
**Kadoma-shi, Osaka 571-8501 (JP)**

(72) Inventors:
• **REY, José, Luis**
**c/o Panasonic R&D Center Germany**
**63225 Langen (DE)**
• **HAKENBERG, Rolf**
**64295 Darmstadt (DE)**

(74) Representative: **Grünecker, Kinkeldey,**
**Stockmair & Schwanhäusser**
**Anwaltssozietät**
**Maximilianstrasse 58**
**80538 München (DE)**

(56) References cited:
• **J. REY, D. LEON, A. MIYAZAKI, V. VARSA, R. HAKENBERG: "RTP Retransmission Payload Format" IETF INTERNET DRAFT DRAFT-IETF-AVT-RTP-RETRANSMISSION-09.TXT, [Online] August 2003 (2003-08), pages 1-26, XP002279287 IETF Retrieved from the Internet: URL:http://www.ietf.org/internet-drafts/dr aft-ietf-avt-rtp-retransmission-10.txt> [retrieved on 2004-05-07] cited in the application**
• **KOICHI YANO, MATTHEW PODOLSKY,STEVEN MCCANNE: "RTP Profile for RTCP-based Retransmission Request for Unicast session" IETF INTERNET DRAFT, 14 July 2000 (2000-07-14), pages 1-10, XP002322902**

**Description**

**FIELD OF THE INVENTION**

The invention relates to a method for providing RTCP feedback messages for data packets of at least one streaming session from a client to a streaming server, wherein the at least one streaming session is provided using a RTP protocol and the RTCP protocol. Further, a RTCP bandwidth, being a fraction of the available streaming session bandwidth, is allocated to the RTCP feedback messages. Moreover the invention further relates to a client in a mobile communication system performing the method.

**BACKGROUND ART**

The 3GPP (3rd Generation Partnership Project) adopts IETF (Internet Engineering Task Force) standardized protocols like RTP, UDP, IP for the transport and packet-switch codecs like AMR (Adaptive Multi-Rate) and H.264 (MPEG 4 part 10) for encoding media. The 3GPP Packet Switched Streaming Services (see "Universal Mobile Telecommunications System (UMTS); Transparent end-to-end streaming service; Protocols and codecs", 3GPP TS 26.234 version 6.1.0, September 2004, available at http://www.3gpp.org) use the RTP/UDP protocol stack to stream audio/video/text media.

RTP is a Real-Time Transport Protocol (see Schulzrinne et al., "RTP: A Transport Protocol for Real-Time Applications", RFC 3550, July 2003, all IETF RFCs and Internet Drafts available at http://www.ietf.org) which is mainly used for real-time or near real-time communication, i.e. communication with relaxed delay constraints. It provides information on the timing of the media it carries and also allows re-ordering and re-assembling at the receiver.

An integrated part of the protocol is RTCP (Real Time Control Protocol) which provides minimal reception information and loose group membership. RTP is generally used together with the RTP/AVP profile (see Schulzrinne et al., "RTP Profile for Audio and Video Conferences with Minimal Control", RFC 3551, July 2003) which defines the use of the RTP header fields and mapping tables for payload types, besides simple RTCP feedback timing rules. The RTCP protocol is allocated a fraction of the available RTP bandwidth in order to compete with TCP/IP based traffic in a fair manner.

UDP (Postel, "User Datagram Protocol", RFC 768, August 1980) is the User Datagram Protocol used to transport RTP packets. UDP is commonly used when an unreliable communication is appropriate for the given media, as is the case for streaming applications. The protocol stack RTP/UDP is used because the timing constraints of the media don't allow reliable communication, e.g. by using TCP (Transmission Control Protocol).

In RTP, packetization schemes (payload formats) for existing media formats (codecs) are specified in the Internet Engineering Task Force Audio/Video Transport Working Group (IETF AVT WG). There is, for example, a payload format for AMR encoded speech data, and another one for H.264 video. A RTP payload format defined in Rey et al., "RTP Retransmission Format", Internet Draft, IETF AVT Workgroup, August 2003, also allows for retransmission of RTP packets in this framework. This may especially useful for 3GPP PSS streaming services.

As specified in by Rey et al. in "RTP Retransmission Payload Format" the mechanism for issuing multiple retransmissions relies on the client issuing the request only when needed. The client must use the feedback possibilities specified in Ott et al., "Extended RTP Profile for RTCP-based Feedback (RTP/AVPF)", internet Draft, IETF AVT Workgroup, August 2004. Other reporting blocks, such as those defined by Friedman et al. in "RTP Control Protocol Extended Reports (RTCP XR)" (see RFC 3611, November 2003) may also be used.

The frequency of reporting may be calculated using the standard RTCP report interval calculation in RFC 3550 (see section 6.3 and Annex). The coverage of the receiver reports, i.e. how many packets are reported, is not specified. The client uses General NACK (Negative ACKnowledgement) feedback messages as specified in the RTP/AVPF profile (draft-ietf-avt-rtcp-feedback-11.txt, can be obtained at http://www.ietf.org/internet-drafts/). Note that the client cannot acknowledge packets using the RTP/AVPF profile since there are no ACK messages specified there. Thus, no provision for comprehensive reporting e.g. by using RLE reports is made.

Furthermore, the Loss RLE Reports as defined in RFC 3611 are enhanced reporting blocks, which are compressible and combine ACKs and NACKs per default, i.e. allow to report on lost and received packets. These reports have been specified for network maintenance purposes, charging, multicast tree inference and statistics gathering.

A third document that deals with Loss RLE Reports and unicast RTCP reporting is the 3GPP Packet Switched Streaming Services (PSS) framework. According to this document it is recommended that streaming clients implement the usage of Loss RLE Report blocks and report in a redundant manner over past RTCP intervals. Further, it is noted that these reports should not be used to trigger retransmissions according to the 3GPP PSS framework.

Redundant reporting in the context of the 3GPP PSS framework is understood as enabling a minimum number of reports on lost data packets prior to or after their processing. There is, however, no specification as to how this mechanism should be implemented at the client and how this mechanism should be used together with RTP retransmissions requests. Redundant reporting on lost packets is desirable since feedback, i.e. RTCP messages, is commonly transmitted using unacknowledged and thus unreliable transport protocols like UDP. Therefore, the feedback provided by the receivers of a session may be lost especially when considering the provision of services via wireless access networks, as for example UMTS.

As indicated above, the PSS framework requires that Loss RLE Report blocks (RFC 3611) are used for charging and network monitoring purposes only, while General NACK messages (RTP/AVPF profile) are to be used to actually trigger retransmissions of the lost data packets. Thus, the PSS framework requires that the RTCP feedback of a transport session comprises General NACKs and Loss RLE Report blocks in order to allow triggering retransmissions and simultaneously allow (e.g.) charging and network monitoring.

The multiple retransmission algorithms described by Rey et al. uses (or might make use of) message formats defined in the RTP/AVPF draft by Ott et al., i.e. General NACKs, to trigger packet retransmission.

If both received and not received packets shall be reported, as recommended by the 3GPP PSS framework, this means that, these report blocks can build up to a considerable overhead, such that the reserved bandwidth allocated to RTCP might not be sufficient to report over the required amount of time to guarantee continuous play-out and/or redundancy of the reports as required. Further, in order to enable charging and network monitoring services in parallel to triggering retransmission, the feedback of the clients receiving a PSS session actually needs to include redundant report blocks (Loss RLE Report blocks), which also causes overhead and impacts the reporting frequency and thereby the level of redundant reporting that may be provided.

## SUMMARY OF THE INVENTION

The object of the invention is therefore to specify method for optimizing RTCP feedback in a unicast sessions.

The object of the invention is solved by the subject-matters of the independent claims. Preferred embodiments are subject matter to the dependent claims.

One embodiment of the invention relates to a method for providing RTCP feedback messages for data packets of at least one streaming session from a client to a streaming server, wherein the at least one streaming session is provided using a RTP protocol and the RTCP protocol. According to this method, the client may determine first, if a maximum number of retransmissions for a data packet that is providable within session constraints of the streaming session is larger than a minimum number of retransmissions to be enabled by the client. If so, a number of General NACK report blocks may be added to a RTCP feedback packet for requesting the retransmission of lost data packets. The added number of General NACK report blocks enables the minimum number of retransmissions of the lost data packets within a client buffering time. Next, the client may determine the maximum RTCP feedback message size that is allowable in view of the session constraints, and may add a number of Loss RLE report blocks to the RTCP feedback packet for reporting on lost data packets, such that size of the resulting RTCP feedback packet does not exceed the maximum RTCP feedback message size. Further, the client may transmit the RTCP feedback packet as an RTCP feedback message to the streaming server.

Another embodiment of the invention relates to a method for providing RTCP feedback messages for data packets of at least one streaming session from a client to a streaming server. In this embodiment, at least one streaming session is provided using a RTP protocol and the RTCP protocol, and a RTCP bandwidth, being a fraction of the available streaming session bandwidth, is allocated to the RTCP feedback messages.

The client may receive session description information being indicative of the RTCP bandwidth for the RTCP feedback messages, a minimum number of retransmissions to be enabled within the client buffering time, a minimum reporting redundancy for lost data packets of the at least one streaming session and the client buffering time. Further, the client may determine the maximum number of retransmissions for a data packet that is providable according to based on the client buffering time and a RTCP report interval. The RTCP report interval may thereby depend on an average RTCP feedback message size and the RTCP bandwidth allocated to the client.

The client may further determine whether the maximum number of retransmissions is larger than or equal to the minimum number of retransmissions, and if so, it may add a number of General NACK report blocks to a RTCP feedback packet for requesting the retransmission of lost data packets. This number of General NACK report blocks added to the RTCP feedback packet may enable the minimum number of retransmissions of the lost data packets within the client buffering time.

The client may also determine the maximum RTCP feedback message size that is allowable under consideration of the allocated RTCP bandwidth, the client buffering time and the minimum number of retransmissions and may determine a resulting average RTCP feedback message size based on the average size of previously sent RTCP feedback message and the size of the RTCP packet comprising the number of General NACK report blocks.

Further, the client may add a number of Loss RLE report blocks to the RTCP feedback packet for reporting on the lost data packets, if the size of the resulting RTCP feedback packet does not exceed the maximum RTCP feedback message size, and may transmit the RTCP feedback packet as an RTCP feedback message from the client to the streaming server.

In another embodiment of the invention the Loss RLE report blocks are added to the RTCP feedback packet for charging or network monitoring purposes.

In a further embodiment the number of Loss RLE report blocks is run-length encoded prior to determining, if the size of the resulting RTCP feedback packet including the run-length encoded Loss RLE report blocks does not exceed the maximum RTCP feedback message size. By performing a run-length encoding of Loss RLE report blocks, their size may be reduced while the reporting redundancy that may be provided with the respective number of report blocks remains constant.

In another embodiment, the client may decide to reduce the minimum reporting redundancy configured by the session description information by the client. Different possibilities to reduce the reporting redundancy on packets lost may be foreseen.

For example in one variation of this embodiment the client may determine the uplink quality of service that is provided for packets of the streaming session, based on this measured or determined quality of service (QoS), the minimum reporting redundancy is reduced, for example if the determined quality of service is above a predetermined threshold level.

Another variation foresees that the reporting redundancy is reduced by the client by reducing the size of the number of Loss RLE report blocks.

For example, in case the data of the streaming session comprises a basic data layer providing a basic streaming media quality and at least one enhancement layer enhancing the basic streaming media quality, the size of the number of Loss RLE report blocks may be reduced by including only information related to data packets that comprise data of the basic data layer to within the Loss RLE report blocks.

When for example the data of the at least one streaming session is an MPEG stream and the basic data layer comprises I-frames and the at least one enhancement layer comprises P-frames and/or B-frames. In this example, the client may ensure that I-frames are reported on while P-frames and/or B-frames which have less impact on the clients perceived QoS of the stream may be only reported if possible within the session constraints set by the session description information.

In this respect, the client may determine whether a lost data packet comprises data of the basic data layer based on data packets already received at the client.

A further possibility to reduce the size of the number of Loss RLE report blocks according to a further variation of the embodiment is to apply thinning to the Loss RLE report block(s).

Moreover, another variation of the embodiment foresee that the size of the number of Loss RLE report blocks is reduced by reducing the number of Loss RLE report blocks being reported in the RTCP feedback packet.

Ideally, in another embodiment of the invention the number of Loss RLE report blocks to be added to the RTCP feedback packet enables the minimum reporting redundancy of the lost packets.

Further, another embodiment of the invention foresees that a MIME type parameter of the streamed session indicates the packet rate. This parameter may for example useful to estimate the average number of packets of a streaming session that will have to be reported within a RTCP report interval.

In a further embodiment of the invention the client may determine which packets of the streaming session are lost based on sequence numbers of data packets received at the client.

Another embodiment of the invention relates to a client in a mobile communication system transmitting RTCP feedback messages for data packets of at least one streaming session from a client to a streaming server. Again the at least one streaming session is provided using a RTP protocol and the RTCP protocol, and a RTCP bandwidth, being a fraction of the available streaming session bandwidth, is allocated to the RTCP feedback messages. The client according to this embodiment of the invention may comprise a receiver for receiving session description information, wherein the session description information is indicative of the RTCP bandwidth for the RTCP feedback messages, a minimum number of retransmissions to be enabled within the client buffering time, a minimum reporting redundancy for lost data packets of the at least one streaming session and the client buffering time, and processing means for determining the maximum number of retransmissions for a data packet that is providable according to based on the client buffering time and a RTCP report interval, wherein the RTCP report interval depends on an average RTCP feedback message size and the RTCP bandwidth allocated to the client, and for determining whether the maximum number of retransmissions is larger than or equal to the minimum number of retransmissions.

The processing means may be further adapted to add a number of General NACK report blocks to a RTCP feedback packet for requesting the retransmission of lost data packets, wherein the number of General NACK report blocks added to the RTCP feedback packet enables the minimum number of retransmissions of the lost data packets within the client buffering time, and to determine the maximum RTCP feedback message size that is allowable under consideration of the allocated RTCP bandwidth, the client buffering time and the minimum number of retransmissions, if the maximum number of retransmissions is larger than or equal to the minimum number of retransmissions.

The processing means may also be adapted to determine an resulting average RTCP feedback message size based on the average size of previously sent RTCP feedback message and the size of the RTCP packet comprising the number of General NACK report blocks, and to add a number of Loss RLE report blocks to the RTCP feedback packet for reporting on the lost data packets, if the size of the resulting RTCP feedback packet does not exceed the maximum RTCP feedback message size.

The client may further comprise a transmitter for transmitting the RTCP feedback packet as an RTCP feedback message to the streaming server.

Another embodiment relates to the client, further comprising means adapted to perform the method according to one of the various embodiment described above and variations thereof.

Moreover another embodiment of the invention relates to a computer readable medium for storing instruction that, when executed by a processor of a client in a mobile communication system, cause the client to provide RTCP feedback messages for data packets of at least one streaming session from a client to a streaming server. Again, the at least one streaming session is provided using a RTP protocol and the RTCP protocol, and a RTCP bandwidth, being a fraction of the available streaming session bandwidth, is allocated to the RTCP feedback messages.

The client may be caused to provide RTCP feedback messages for data packets of at least one streaming session from a client to a streaming server by receiving session description information at the client, wherein the session description information is indicative of the RTCP bandwidth for the RTCP feedback messages, a minimum number of retransmissions to be enabled within the client buffering time, a minimum reporting redundancy for lost data packets of the at least one streaming session and the client buffering time, by determining the maximum number of retransmissions for a data packet based on the client buffering time and a RTCP report interval, wherein the RTCP report interval depends on an average RTCP feedback message size and the RTCP bandwidth allocated to the client, by determining whether the maximum number of retransmissions is larger than or equal to the minimum number of retransmissions.

If the latter is the case, the instructions may cause the client to adding a number of General NACK report blocks to a RTCP feedback packet for requesting the retransmission of lost data packets, wherein the number of General NACK report blocks added to the RTCP feedback packet enables the minimum number of retransmissions of the lost data packets within the client buffering time, to determine the maximum RTCP feedback message size that is allowable under consideration of the allocated RTCP bandwidth, the client buffering time and the minimum number of retransmissions, to determining an resulting average RTCP feedback message size based on the average size of previously sent RTCP feedback message and the size of the RTCP packet comprising the number of General NACK report blocks, to add a number of Loss RLE report blocks to the RTCP feedback packet for reporting on the lost data packets, if the size of the resulting RTCP feedback packet does not exceed the maximum RTCP feedback message size, and to transmitting the RTCP feedback packet as an RTCP feedback message from the client to the streaming server.

The computer readable medium according to a further embodiment of the invention, further stores instructions that, when executed by the processor of the client, cause the client to perform the method according to one of the various embodiments of the invention described above an variations thereof.

Another embodiment of the invention provides a system comprising a streaming server providing at least streaming session to a client, wherein the at least one streaming session is provided using a RTP protocol and the RTCP protocol, and a client according to one of the embodiments of the invention above.

## BRIEF DESCRIPTION OF THE FIGURES

In the following the invention is described in more detail in reference to the attached figures and drawings. Similar or corresponding details in the figures are marked with the same reference numerals.

Fig. 1      shows an overview of a streaming environment according to an embodiment of the invention,

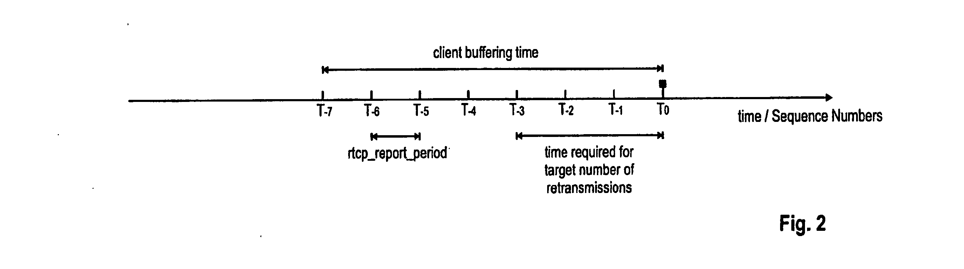

Fig. 2      shows the relationship between the client buffering time, the RTCP report period and a minimum time period required to provide a target level of retransmissions according to an embodiment of the invention, and

Fig. 3      shows the timeline of a number of consecutive retransmission requests and retransmissions in a streaming environment according to an exemplary embodiment of the invention,

Fig. 4      shows the initial steps of a method for providing RTCP feedback within a streaming session according to an embodiment of the invention, and

Fig. 5 & 6      show further steps of the method for providing RTCP feedback according to different embodiments of the invention, wherein the illustrated steps are performed after those shown in Fig. 4.

**DETAILED DESCRIPTION**

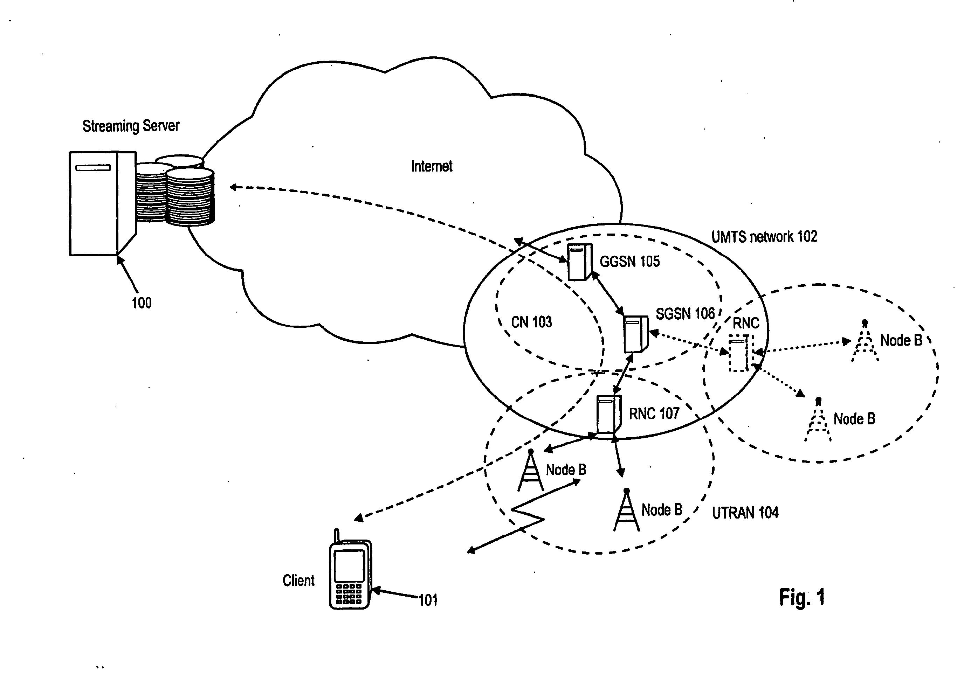

Fig. 1 shows an overview of a streaming environment according to an embodiment of the invention. A streaming server 100 may deliver a streaming service in form of one or multiple sessions via a wireless access network to the client 101 or mobile terminal. In the example a UMTS network comprising a core network 103 (CN) and a UMTS radio access network 104 (UTRAN) provides the streamed packet switched service, which may be operated according to the requirements as defined in 3GPP TS 26.234. To connect the core network 103 to a packet switched network, e.g. the Internet, the core network may comprise a gateway GPRS support node 105 (GGSN) and a serving GPRS support node 106 (SGSN). The core network's components may be connected to the UTRAN 104 comprising at least one radio access controller 107 (RNC) and at least one Node B connected to a RNC. The data of the streamed media may be provided to a mobile client 101 via a wireless link.

One aspect of the invention is to efficiently use RLE report blocks for loss reporting in different RTP retransmission implementations. Such implementation typically differ in the functionalities that server and client carry out, the information both use to schedule/request retransmissions and the knowledge that they have about the network conditions (congestion, packet losses, link characteristics). The 3GPP PSS streaming services define session description attributes, which may or may not be used to make this information available between communicating peers.

For all RTP retransmission implementations the same initial scenario and requirements may be assumed: The client should perform redundant reporting as RTCP transport is unreliable. Further, the client should report at least over the period between the current report and the last report, i.e. guarantee minimum receiver reporting.

The report frequency should be sufficiently high to allow for timely retransmission, i.e. to guarantee a minimum number of retransmissions for each RTP packet. Accordingly, the client may limit its report frequency, report block size and redundant reporting to comply with the RTCP bandwidth signaled by the server.

As some of these requirements are competing and it might not be possible to fulfill them simultaneously in every scenario, the client may optimize the level of redundant reporting, the reporting frequency and the number of reported RTP packets for the given conditions.

For example (and assuming that the RTCP-bandwidth share and the client buffering time allows for redundant reporting) this could mean that in an simple implementation the client will request retransmission for and report about all lost packets between the current RTCP report and the last RTCP report using General NACK report blocks and Loss RLE report blocks, respectively, set the level of redundant reporting on lost and received packets to a reasonable value and keep the RTCP report frequency as high as possible to allow for a maximum of timely retransmissions. It should be noted that RTP packets on the downlink (server to client) may be lost multiple times and may therefore require multiple retransmissions.

If this simple implementation should not comply with the requirement to limit the report frequency, report block size and redundant reporting to comply with the signaled RTCP bandwidth, the client may first try to reduce the Loss RLE Report block size by run length encoding.

A Loss RLE report block permits detailed reporting upon individual packet receipt and loss events. Such reports can be used, for example, for multicast inference of network characteristics (MINC). Since a Boolean trace of lost and received RTP packets is potentially lengthy, this block type may permit the trace to be compressed through run length encoding. When using run length encoding, the trace to be encoded is analyzed and "runs" of identical events may be summarized to reduce the overall size of the Loss RLE report block.

Next, the client may reduce the number of reported RTP packets per Loss RLE report block. Please note, that the reduced number of packets that are reported by a single report block will result in a reduced level of redundant reporting.

In order to reduce the number of packets that is reported on by a Loss RLE report block, loss event reports can be systematically dropped from the trace in a mechanism called thinning. The thinning mechanism may be implemented by choosing a thinning value, T, which may be used to select a subset of packets within the sequence number space, e.g. those packets with sequence numbers that are multiples of 2T. Packet reception and loss reports apply only to those packets. T may e.g. vary between 0 and 15. If T is zero, then every packet in the sequence number space is reported upon. If T is fifteen, then one in every 32,768 packets is reported upon.

Suppose that the trace just described begins at sequence number 13,821. The last sequence number in the trace is 13,865. If the trace were to be thinned with a thinning value of T=2, then every fourth sequence numbers would be reported upon: 13,824, 13,828, 13,832, 13,836, 13,840, 13,844, 13,848, 13,852, 13,856, 13,860, 13,864.

Another option to reduce the number of packets reported on is to report only on the packets that fall in the latest packets.

Finally if all these measures are not helpful and if there is a hard requirement for a minimum number of retransmission requests (General NACK report block(s)) prior to expiry of the client buffering time, the client may restart the session with enhanced RTCP bandwidth to comply with these required minimum number of retransmissions and/or may enhance the client buffering time (see below for more details).

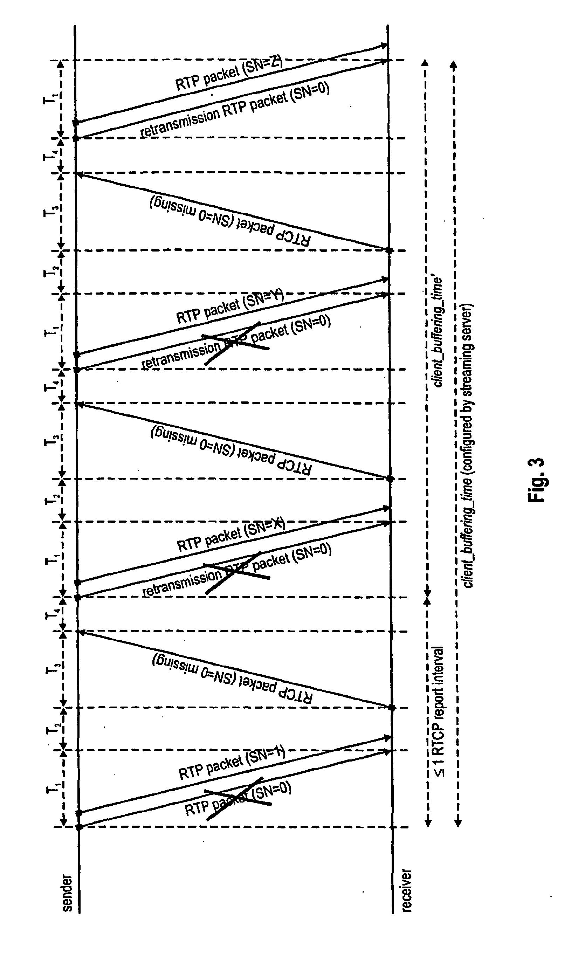

For the further discussion of the ideas underlying the invention, the relations between RTCP bandwidth, client buffering time, RTCP report interval, etc. will be discussed with reference to Fig. 3. Fig. 3 shows an overview of a streaming environment according to an embodiment of the invention. In the Figure the timeline of a number of consecutive retransmission requests and retransmissions is shown. The initial transmission of the RTP packet (SN=0) as well as the first and second retransmission thereof is assumed to be lost.

The sender (e.g. streaming server) provides a RTP data packet to the receiver (client). The parameters contributing to the delay $T_1$ are the one-way-delay from sender to receiver on through network(s), i.e. the physical delay, the transmission delay on the air interface and the delay caused by interarrival jitter caused by network queues, reordering, etc.:

$$T_1 = physical\ delay + transmission\ delay + interarrival\ delay\ jitter \qquad (1)$$

or more precise:

$$T_1 = physical\ delay + \frac{average\ packet\ size}{available\ downlink\ bitrate} + interarrival\ delay\ jitter \qquad (2)$$

Assuming that the initial transmission of the packet is lost, $T_2$ specifies the time interval between the theoretical arrival of the packet and the point in time at which the receiver provides feedback indicating the packet loss to the sender.
Thereby $T_2$ is composed of the time required to detect the packet loss (packet loss detection time) at the client and the average time to the next feedback report from the client:

$$T_2 = packet\ loss\ detection\ time + average\ time\ to\ next\ feedback\ report \qquad (3)$$

The packet loss detection time depends on whether single packets are occasionally lost (single-ton losses) or whether the packet losses occur in bursts (bursty losses). In the first case, the packet loss detection time should be equal to the interarrival delay jitter experienced at the receiver. In the second case an additional guard time must be added to the buffering time for the determination of the actual value. This guard time may be defined as the average loss burst and reflects the fact that bursty losses take a longer time to be detected.
Commonly loss events are uniformly distributed such that the average time to the next feedback report is commonly one half of the RTCP report interval:

$$average\ time\ to\ next\ feedback\ report = \frac{1}{2} \cdot RTCP\ report\ interval \qquad (4)$$

The delay of the feedback report $T_3$ may be essentially calculated in a similar manner as the delay $T_1$.

$$T_3 = physical\ delay + transmission\ delay + interarrival\ delay\ jitter \qquad (5)$$

or more precise:

$$T_3 = physical\ delay + \frac{average\ packet\ size}{available\ uplink\ bitrate} + interarrival\ delay\ jitter \qquad (6)$$

Finally, the processing time of the retransmission at the sender is denoted T4 and comprises the time needed by the sender to decide which packets are to be retransmitted (feedback processing time) and the queuing time at the sender, i.e. the time the packets to be retransmitted stay in the (re)transmission queue of the sender before being actually transmitted:

$$T_4 = feedback\ processing\ time + queuing\ time \qquad (7)$$

It should be noted that the $T_1 + T_2 + T_3$ corresponds to the roundtrip time (RTT):

$$RTT = T_1 + T_2 + T_3 \qquad (8)$$

The RTT is typically smaller than the RTCP report interval. Otherwise the reporting would be excessive, since the receiver would send feedback without awaiting the retransmission of packets first. Furthermore the sum of the RTT plus the feedback processing time likewise typically falls within the RTCP report interval since the server is usually subject to guarantee a defined retransmission bandwidth and thus this time does not increase much.

Another important "variable" of a RTP session having impacting the reporting redundancy that can be provided, is the client buffering time already mentioned above. The client buffering time may be generally defined as the time span a particular data packet is buffered in a memory of the receiver before being "output" to the user. For example, for a video streaming session, the client buffering time may be understood as the time span of storing a data packet in the receiver's memory (buffer) before displaying the content of the data packet to the user.

The number of retransmissions that may be provided in a RTP session before a packet is provided to the user may be specified as:

$$no.\ of\ possible\ retransmissions = Integer(\frac{client\ buffering\ time - (T_1 + T_2 + T_3 + T_4)}{RTCP\ report\ interval})$$

$$(9)$$

The "Integer()" function extracts the integer value from the result of the division. The RTCP report interval (for uplink transmissions) is defined by:

$$RTCP\ report\ interval = \frac{average\ RTCP\ packet\ size}{available\ uplink\ RTCP\ banwidth} \qquad (10)$$

wherein

$$average\ RTCP\ packet\ size = \frac{1}{16} \cdot current\ RTCP\ packet\ size + \frac{15}{16} \cdot average\ RTCP\ packet$$

$$size$$

$$(11)$$

In this equation the current RTCP packet size equals the size of the next RTCP feedback to be sent.

One simplification of the calculations above may be that only non-bursty, i.e. singleton losses of packets are considered in the definition of $T_2$, i.e.

$$T_2 = \text{interarrival delay jitter} \qquad (12)$$

Since $T_1 + T_2 + T_3 + T_4$ may not be always available at the client, a conservative approximation can be used for this sum may be used as indicated in Fig. 3 (note that a minimum number of retransmissions of 3 is assumed for exemplary purposes). E.g. the RTCP report interval value may represent a rough estimate for this sum and a conservative buffering time *client_buffering time'* which may be defined:

$$client\_buffering\_time' = client\_buffering\_time - rtcp\_report\_interval$$

The conservative client buffering time *client_buffering time'* can also be understood as the buffering time to ensure the minimum number of required retransmissions *min_no_rtxs.* This is of course only valid as long as the value $T_1 + T_2 + T_3 + T_4$ is less than the RTCP report interval, which is typically the case since otherwise the client would not await a possible retransmission before sending the feedback. This shall be ensured by the server or content creator responsible for compiling the session description information using SDP or similar protocols.

According to one embodiment of the invention the calculation of the number of possible retransmissions (see Equation 9) may be simplified to:

$$no.\ of\ possible\ retransmissions =$$
$$= Integer(\frac{client\ buffering\ time - (T_1 + T_2 + T_3 + T_4)}{RTCP\ report\ interval}) =$$
$$\approx Integer(\frac{client\ buffering\ time - RTCP\ report\ interval}{RTCP\ report\ interval}) = \qquad (13)$$
$$= Integer(\frac{client\ buffering\ time'}{RTCP\ report\ interval})$$

Of course also the more precise calculation of equation 9 may be used. Equation 13, may however be easier to implement. In the initial phase of a PSS streaming service the client requests a description on details of the session offered from a certain server. In response to the request, the server sends the session description. Inter alia, the following parameters are made known to the client by the session description:

■ MIME Type of the codec used for the media session: e.g. H263, AMR, MPEG4, etc.

■ RTCP bandwidth share, *clienf_rtcp_bandwidth* (bits per second), for the receiver reports. The default bandwidth share for unicast streaming applications such as those targeted by the PSS specification is 50% of the total RTCP bandwidth for each, sender and receiver. Another values may be explicitly specified using the provisions of RFC 3556. The total RTCP bandwidth is commonly 5% of the total session bandwidth.

■ Optionally MIME Type parameters that described the codec. These parameters may be used to calculate other values of the stream such as the packet rate (number of packets per second).

■ Optionally the maximum RTCP packet size that a client may use. Currently it is possible within the PSS framework to limit the RTP (not RTCP) packet size of a server. Similar limitations are possible for RTCP report packets in the future.

Further, according to an embodiment of the invention the following additional parameters are known to the client:

■ The minimum number of retransmissions, *min_no_rtxs,* recommended by the server. The server may propose that the client guarantees a minimum number of retransmissions for each packet. The reason for this may be that the service provider is aware of the packet loss on the link. As indicated above, retransmissions in PSS streaming services need to be triggered by General NACK report blocks in the feedback.

■ The reporting redundancy, *report_redundancy,* (also) recommended by the server. This quantity indicates how many times a packet is reported using the Loss RLE report blocks. For service providers it is important to know the achieved performance of the link (which packets arrived or not) and how many retransmissions are needed at maximum to provide the packets to the clients. This is also important for charging, where clients are only charged for the individually perceived service quality.

■ The client buffering time, *client_buffering_time* (measured in seconds) that may be derived from the session parameters as described in the following paragraphs.

Considering the client buffering time there may be two possible scenarios:
The first possibility is that, the client does not support bit-rate adaptation as defined in the 3GPP PSS framework.
In this case the *client_buffering_time,* may be chosen equal to the initial buffering time, i.e. the time after which the client starts reading out the packets of the buffer at session start.
The second possibility is that the client supports bit rate adaptation as defined by the 3GPP PSS framework. In this latter case, the following parameters are available to the client:

■ The buffer size, *buffer_size,* which is signaled in the "3GPP-Adaptation" header. This parameter should correspond to a reception and de-jittering buffer that has this given amount of space for complete RTP packets including the RTP header. The specified buffer size may also include any pre-decoder buffer space used for this media. This parameter thus corresponds to a maximum size of session data (RTP packets) the client may have available at any given moment of the session. Commonly, this parameter is not used for determining a value for the client buffering time.

■ The target protection time, *target_protection_time,* signaled to the client in the "3GPP-Adaptation" header ("target-time" parameter). This parameter denotes the targeted minimum buffer level or, in other words, the desired amount of playback time at the client (in milliseconds) to guarantee interrupt-free playback and allow the server to adjust the transmission rate, if needed. According to one embodiment of the invention, this parameter is used as the client buffering time, *client_buffering_time.*

Once the client has received the session description information the client may calculate whether the signaled RTCP bandwidth share *(client_rtcp_bandwidth)* and intended *client_buffering_time* for the given media stream is chosen such that reporting on packet losses is possible. Additionally it may further calculate, if the desired report redundancy as indicated by the *report_redundancy* parameter and the requested minimum number of retransmissions indicated by the *min_no_rtxs* parameter may be provided given the RTCP bandwidth share and client buffering time.
It should be recalled that the reporting redundancy refers to the provision network monitoring, charging, etc. issues (Loss RLE Report blocks), while the minimum number of retransmissions to be provided is based on the feedback of General NACKs, as outlined previously.
According to one embodiment it is assumed that the client's buffer sets a timer to *client_buffering_time* seconds for each packet. If a packet is not received within said that time span, the timer expires and the packet cannot be longer requested for retransmission (i.e. cannot be included in a further General NACK message).
Further, it may also be assumed that past RTCP reports (containing the previously transmitted General NACK report blocks and Loss RLE report blocks) are saved in a send buffer at the client. The size of this buffer may for example be set corresponding to the *server_buffering_time* (in seconds). Moreover, this buffer should big enough to store the needed RTCP packets sent, as needed by the method described below.
The following passages describe an exemplary algorithm according to an embodiment of the invention which is complementary to the standard RTP algorithms as described in RFC 3550, Annex A. In contrast to the standard RTP algorithms, the invention according to this algorithm allows considering the parameters *min_no_rtxs* and *report_redundancy* to configure a PSS conform session. The algorithm helps the client find out what is the size of the General NACK and Loss RLE Report needed to:

■ enable the maximum number of packet retransmissions for every packet or enforce a minimum number of retransmissions, *min_no_rtxs,* within the client buffering time

■ provide report redundancy as set by the *report_redundancy* parameter (if possible),

■ while complying with the given RTCP bandwidth for receiver reports and client buffering capabilities.

The following exemplary steps may be executed by the client for every RTCP receiver report sent by the client, starting with the first RTCP packet.

Step 1. After an initial waiting period of 1 second as per RTP/AVPF, the client may request packet retransmissions in a new General NACK message. From an implementation viewpoint, this step is a look-up operation since at every client implementing retransmission according to the Internet Draft of Rey et al. mentioned above should keep a list of pending requests.

An exemplary list may consist of two columns: one with the sequence number SN and other with a flag indicating whether the packet with the given SN has been received or not received, e.g. "0" is not received, "1" is received. The non-received packets present in this list are included in the NACK. Note that non-received packets are removed from this list after expiry of the client buffering time *(client_buffering_time)* for the respective packet.

**Step 2**. The second step is to calculate the maximum number of retransmissions *(max_no_rtxs)* for the packets reported in the General NACK report blocks for the given RTCP bandwidth, *client_rtcp_bandwidth.* Since the packets pending for retransmission is the minimum set of information that every retransmission packet should comprise to enforce a minimum number of retransmissions *(min_no_rtxs),* the maximum number of retransmissions may be calculated by dividing the *client_buffering_time'* through the current value of the RTCP report interval, *rtcp_report_interval*:

$$max\_no\_rtxs = \frac{client\_buffering\_time'}{rtcp\_report\_interval} = client\_buffering\_time' \cdot \frac{client\_rtcp\_bandwidth}{avg\_rtcp\_paket\_size_{NACK}}$$

$$(14)$$

It should be noted that this calculation comprises the simplification provided in Equation (13) above. The RTCP report interval parameter, *rtcp_report_interval,* is commonly kept by each RTP client and server as part of the RTP basic algorithms.

The average RTCP packet size, *avg_rtcp_packet_size$_{NACK}$,* may be calculated as (see also Equation 11 above):

$$avg\_rtcp\_packet\_size_{NACK} =$$

$$\frac{1}{16} \cdot current\_rtcp\_packet\_size_{NACK} + \frac{15}{16} \cdot avg\_rtcp\_packet\_size$$

$$(15)$$

The current RTCP packet size (in bytes), i.e. the packet size of the next feedback message when comprising a General NACK report block (but no Loss RLE report block), may be calculated as:

$$current\_rtcp\_packet\_size_{NACK} = K + (step(n, 17)) \cdot 4 \qquad (16)$$

where the *step()* is the mathematical step function that takes n and the constant 17 as parameters. 17 is the number of packets that can be requested in a single General NACK report block. It is of course possible to choose a different constant than 17 as a parameter for the step function in case more/less than 17 packets may be requested by a single General NACK report block. For several values of n:

$$step(n, 17) =$$

| | |
|---|---|
| 0 | *if n<=0;* |
| 1 | *if 1<=n<=17;* |
| 2 | *if 1·17+1<=n<=2·17;* |
| 3 | *if 2·17+1 <=n<=3·17* |
| ... | |

K is constant accounting for the fixed fields in IP packet containing RTCP receiver messages with at least one General NACK message.

For example, if the packet has a standard composition of one Receiver Report (RR) of 32 bytes plus one SDES item (with CNAME) of 12 bytes without encryption header or profile specific extensions, the fixed fields amount to IP header+ UDP header + RTCP header + 1 RR + 1 SDES item (CNAME) + NACK fixed fields, i.e. 20+8+8+24+12 +12 = 84 bytes.

In case the packet contains profile specific extensions or other SDES items such as phone number, email or other RTCP report blocks such as a BYE packet or an application-specific packet (APP), then the fixed fields must be added to this constant K. Same applies for K' below.

If the calculated maximum number of retransmissions (Equation 14), *max_no_rtxs,* is larger than one (>1) this means that lost packets have a chance to be received in a later retransmission(s).

Typically the client may be required to comply with a minimum number of retransmission, *min_no_rtxs.* If this is not possible, i.e. *max_no_rtxs < min_no_rtxs,* the client may decide to continue with a lower number of retransmissions or to re-initiate the session, choosing other settings (e.g. some codec configuration that requires less buffering time, by choosing a higher RTCP bandwidth, a stream that is better protected so that *min_no_rtxs* is smaller, etc.) as it is not possible to provide the required minimum number of retransmissions for packets within the constraints given by the RTCP bandwidth share and the client buffering time.

In other words, if there is a minimum number of retransmissions required by the client which can be met according to the calculations above, it is possible to add data to the feedback until the maximum packet size (see below) is reached. Otherwise the RTCP packets are too big and retransmissions cannot be requested as often as required.

The maximum size of the RTCP packet, *max_rtcp_packet_size,* that allows for requesting a number of min_ no_rtxs retransmissions of a packet may be calculated as follows:

$$\mathrm{max\_}rtcp\_packet\_size = client\_buffering\_time' \cdot \frac{client\_rtcp\_bandwidth}{\min\_no\_rtxs} \quad (17)$$

Note that the Equation 17 is defined for every value of *min_no_rtxs,* since the latter parameter is always greater than 1. Otherwise it would not make sense to use retransmissions as suggested by Rey et al. in the Internet Draft mentioned above.

**Step 3.** Assuming that the client is able to enforce *min_no_rtxs* and assuming that *max_no_rtxs > min_no_ rtxs* the next step is to fill the feedback messages with Loss RLE report blocks (in addition to General NACKs for requesting the retransmissions) until the *max_rtcp_packet_size* as calculated using Equation 17 is reached. In other words, the difference between the *max_rtcp_packet size* and the *current_rtcp_packet_size$_{NACK}$* is equal to the amount of data that may be added to the current RTCP packet without violating the requirements for a minimum number of retransmissions, *min_no_rtxs:*

$$payload\_margin= max\_rtcp\_packet\ size - current\_rtcp\_packet\_size_{NACK} \quad (18)$$

Similar to the case above (see Equation 16), the general formula for calculation of the RTCP packet size, including IP and UDP headers, for the RTCP with General NACK messages and Loss RLE Reports as a function of n is as follows:

$$current\_rtcp\_packet\_size = K' + (\ step(n,17) + step'(n', 30))\cdot 4 \quad (19)$$

where the *step'()* is the same as above and *step()* is the mathematical step function that takes n and the constant 30 as parameters. Please note that in Equation 19 it is assumed that at least Loss RLE report block is included in the feedback, otherwise. Equation 16 may be used to calculate the current RTCP packet size. The parameter 30 is the number of packets that can be reported on in a single Loss RLE report block. It is of course possible to choose a different constant than 30 as a parameter for the step function in case more/less than 30 packets may be reported by a single RLE report block. For several values of *n':*

$$step'(n',30) =$$

| | |
|---|---|
| 0 | *if n'<=0;* |
| 1 | *if 1<=n'<=1·30;* |
| 2 | *if 1·30+1<=n'<=2·30;* |
| 3 | *if 2·30+1<=n'<=3·30;* |
| ... | |

It should be noted that *n* and *n'* increase step-wise. The reason for this is that the RTCP reports are 32-bit aligned and a whole 4-byte word is added whenever the number of packets to report exceeds a multiple of 17 or 30.)

In Equation 19 K' is 6 bytes larger than K defined for Equation 16 above, since (at least) one Loss RLE report block included in the (current) RTCP feedback message to be sent next.

If the client is required to comply with a given *report_redundancy* value, it may include past Loss RLE report blocks as defined by this value. E.g. a *redundancy_value* of 2 means that the same Loss RLE report is sent in two consecutive RTCP reports. If the value is three, then the same Loss RLE report block is present in 3 consecutive RTCP packets and so on. In other words, the if the reporting redundancy is set to 2 a single RTCP report (i.e. the RLE report blocks therein) should report over the past two RTCP report intervals, if the reporting redundancy is set to 3 the past three RTCP report intervals should be reported on, etc. This may require that the client keeps a list (e.g. a two column array) of received and non-received packets, including packets that may be expired. This is different from the contents of the client buffer, which only includes packets that have not yet expired.

**Step 4**. It may also happen that including the required number of Loss RLE report blocks that would have to be added to the next RTCP feedback message (in addition to General NACK reprt block(s)) for providing the required reporting redundancy exceeds the allowed maximum RTCP packet size, *max_rtcp_packet_size.* In this case the client may try to reduce the size of the Loss RLE report block(s) by run-length encoding. As a further option other methods like thinning as described above may be used to reduce the packet size. However, when considering the use of thinning the reporting redundancy will be decreased.

If these mechanisms do not allow to sufficiently reduce the size of the RLE report blocks to guarantee the required reporting redundancy the client may decide to not comply with this *report_redundancy* value, and may continue sending. Alternatively, it may re-initiate the session and choose a larger client buffering time or some codec configuration with lower bitrate.

**Step 5**. Finally the rest of the variable update and standard procedures in the standard algorithms as per RFC 3550, Annex A, such as the *avg_rtcp_packetsize* and *rtcp_report_interval,* are calculated in the standard way:

$$avg\_rtcp\_packet\_size = \frac{1}{16} \cdot current\_rtcp\_packet\_size + \frac{15}{16} \cdot avg\_rtcp\_packet\_size$$

$$rtcp\_report\_interval = \frac{avg\_rtcp\_packet\_size}{client\_rtcp\_bandwidth}$$

Every time an RTCP packet is sent the steps 1 through 5 may be repeated. Alternatively, the client may also choose to iterate through these steps only upon changes in the client capabilities, especially upon changes in the client buffering time or the client RTCP bandwidth occur.

After having sent the feedback message, the client may update the various parameters of the session according to the provisions outlined in RFC 3550. For example, the client may recalculate the average RTCP packet size, may recalculate the RTCP report interval resulting therefrom, may update the send buffer contents, and may start calculations for the next RTCP feedback to send.

In another embodiment, the size of the Loss RLE report block may be further reduced, by the client reducing the *report_redundancy.* However, in this situation the question arises whether the client may still obtain a reasonable level for redundant reporting.

Reducing the reporting redundancy may be possible in implementations that allow for measuring the packet loss rate on the link. The packet loss rate may for example be estimated from RTCP reports from the sender. Alternatively or in addition the client may have some a-priori knowledge about the link QoS from the link set-up procedure. Hence, when the packet loss rate on a particular link to the client is low/high, the level of redundant reporting may be further reduced/increased, since the lower/higher the packet loss rate the more likely/unlikely it is that the feedback of the client is received at the sender when using an unreliable transport protocol.

Another method to reduce the Loss RLE Report block size, apart from those specified in the Internet Draft of Friedman et al. may for example be based on the an estimation of the importance of individual packets. E.g. in progressive coding technologies such as MPEG-4 packets have different priorities. Less important packets, i.e. P-frames, may thus be dropped in the reporting.

Alternatively or in addition the current application level QoS and link level QoS may be taken into account for reducing the size of Loss RLE report blocks. E.g. if current application level QoS is sufficiently high and/or the link level QoS is low (i.e. congestion on the link), the client could decide to drop the reporting for some lost packets. For example, the MPEG4 codec implements advanced packet loss resilience measures. In some cases and depending on the content of the stream, it might well be the case that several packets were lost on the link, while the quality of the picture is not affected by these losses; in particular, if B frames are lost, the effect is minimum and the cost of a packet retransmission may be greater and so may the application decide to drop this packet.

The invention has the following advantages for 3GPP PSS unicast streaming services. First, it provides the 3GPP PSS framework with additional mechanism for streaming servers and clients for constructing the RTCP Receiver Reports using General NACKs and RLE Report blocks. Assuming the client knows the *client_buffering_time* and the *client_rtcp_bandwidth,* the method enables specifying the size of the reports to provide a minimum number of retransmissions, *min_no_rtxs,* and a given *report_redundancy,* how often should they be sent and how many packets they should cover.

As indicated above, report redundancy is important for charging applications and for network monitoring especially with respect to the performance of retransmissions, i.e. how many times packets are re-transmitted before they are (successfully) received by the client.

Further, the invention defines a framework for specifying a wide spectrum of client configurations, such that from a most simple client to a full featured client can be set-up depending on which information is available at the client and how efficient the Loss RLE Report compression should be. Moreover, some embodiments of the invention provide additional methods to reduce the size of the RTCP feedback.

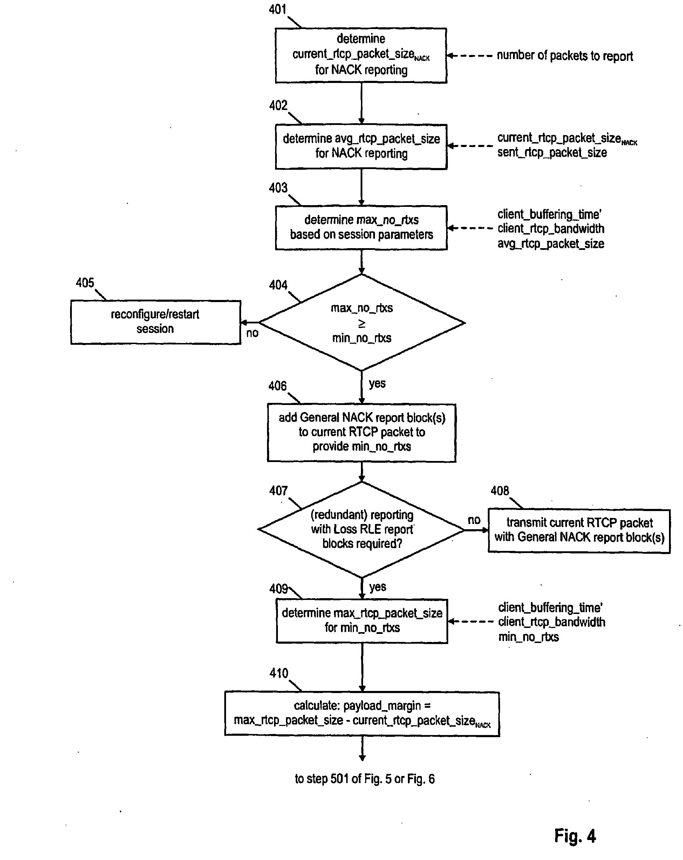

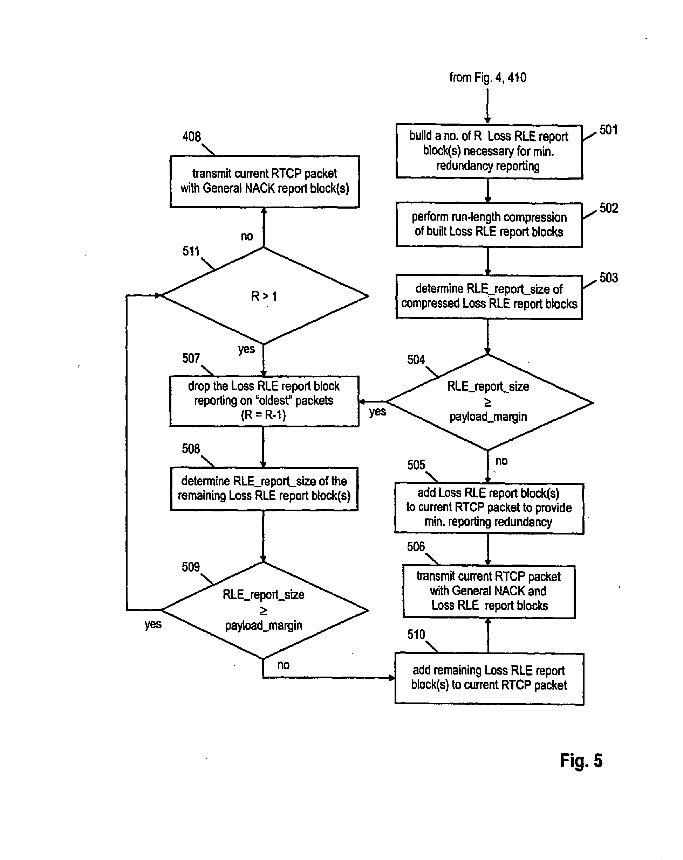

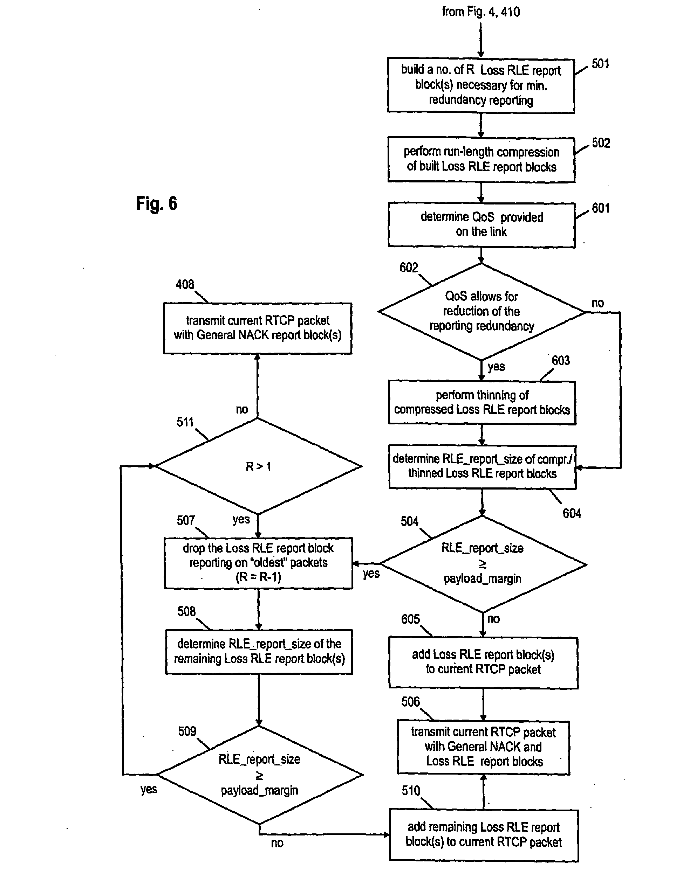

Next, different and more specific exemplary embodiments of the invention will be described with reference to Fig. 4, 5 and 6.

Fig. 4 shows the initial steps of a method for providing RTCP feedback within a streaming session according to an embodiment of the invention. Upon expiry of the current RTCP report interval the client prepares to send the next RTCP feedback to the server. First (steps 401 to 404) the client may determine whether the session parameters set allow to ensure that a required minimum number of retransmissions *(min_no_rtxs)* may be sent. For this purpose, the client may determine 401 the size of the current RTCP packet (next RTCP packet to sent) assuming it only contains the General NACK report block(s) necessary to ensure the minimum number of retransmissions configured for the session. As described earlier (see equation 16) the size of the current RTCP packet will depend on the number of packets to report on.

Based on this calculated value *(current_rtcp_packet_size$_{NACK}$)* as well as the average size of previous RTCP feedback messages (sent_rtcp_packet_size), the average RTCP packet size *(avg_rtcp_packet_size$_{NACK}$)* may be determined 402 using Equation 15 above. Next, the maximum number of retransmissions *(max_no_rtxs)* that can be enabled 403 within the client buffering time is calculated (see Equation 14).

Based on these calculations, the client may determine in step 404, whether the requested minimum number of minimum retransmissions *(min_no_rtxs)* can be enabled or not. If not, the client may reconfigure or restart (405) the session with a different set of session parameters as described above.

In case the *max_no_rtx > min_no_rtxs,* the session parameters client buffering time, RTCP bandwidth share and the minimum number of retransmissions have been chosen such that the client may be operated within these constraint parameters. In a next step 406, the client may therefore add the General NACK report block(s) necessary to provide a minimum number of retransmissions to the current feedback message. In case no (additional) reporting with Loss RLE report blocks is required for the session (see step 407) the client may proceed with transmitting 408 the current feedback message containing only General NACK report block(s) to the server.

If (redundant) reporting on packet loss is mandatory for the session, the client may next determine whether the current feedback message has enough capacity to comprise not only the General NACK report block(s) for ensuring the minimum number of retransmissions but additionally the number R of Loss RLE report block(s) required for ensuring the redundant reporting on packet loss.

For this purpose, the client may next determine the maximum size of the RTCP feedback messages that allow for providing a minimum number of retransmissions in step 409 (see Equation 17). As indicated above, the maximum RTCP packet size, *max_rtcp_packet_size,* is a measure indicating the average message size allowed for providing feedback when ensuring a minimum number of retransmissions.

Due to knowing that *max_no_rtx > min_no_rtxs* (see step 404), it is also clear that the maximum RTCP packet size is equal to or larger than the average RTCP packet size containing the General NACK report block(s),

In step 410 the client determines the payload margin left in the current RTCP packet. In other words, the client determines how many bytes *(payload_margin)* may be further added to the current RTCP packet already comprising the General NACK report block(s) without violating the maximum allowable (average) size of the RTCP feedback.

Generally, the next steps following in the flow chart shown in Fig. 5 and 6 should be understood as examples illustrating how the remaining space *(payload_margin)* within a current RTCP feedback message may be filled with Loss RLE report block(s) to ensure a (minimum) redundant reporting, if possible at all. As will be explained in more detail below it may not be possible in some cases to enable a minimum number of redundant reports on lost packets. Nevertheless, in this situation, it may be desirable to provide at least some level of (redundant) reporting rather than no reporting at all.

In a next step 501 (Fig. 5), the client may build a number R of Loss RLE report blocks which would be necessary for enabling the requested minimum reporting redundancy. As the size of the Loss RLE report blocks may be too large to fit them into the payload margin, the client may perform a run-length compression of the Loss RLE report blocks as illustrated by step 502. Please note that this step is optional. Next, the size of the R (compressed) Loss RLE report block is determined in step 503 and the value is compared with the payload margin in step 504 in order to determine whether all R Loss RLE report blocks fit into the current RTCP feedback message without violating the maximum allowable (average) RTCP packet size that allows to enable a requested minimum number of retransmissions.

If so, the R (compressed) Loss RLE report blocks are added 505 to the feedback message and the client transmits 506 a RTCP feedback message comprising a number of General NACK report blocks and a number (R) of Loss RLE report blocks. In this case, the client may ensure that the minimum number of retransmissions is enabled and also a minimum reporting redundancy can be provided.

If however the size of the R (compressed) Loss RLE report blocks in step 504 is larger than the payload margin, the client may try to provide at least some (redundant) reporting on lost packets. For this purpose, the client may further proceed with step 507 and may reduce the number of Loss RLE report blocks to be included in the current feedback until the remaining number of (compressed) Loss RLE report blocks fits 509 into the payload margin of the current RTCP feedback message. For example, the client may consecutively drop (see steps 507, 508, 509, 511) report blocks reporting on the "oldest" packets, as same may have been already been reported in previous reports. Another possibility may be to perform thinning until the size of the Loss RLE report blocks drops below the payload margin. Event further, the client may also take into account the importance of packets reported on as has been described above. Another alternative may be to combine these mechanisms as needed.

In this respect Fig. 6 illustrates further steps of forming a RTCP feedback message according to another embodiment of the invention. The steps similar to those in Fig. 5 have been assigned the same reference numerals and their description is omitted for brevity in the following.

The steps illustrated in Fig. 6 allow combining thinning and other mechanisms to reduce the size of the Loss RLE report blocks. Important to notice is that the decision on whether thinning (see step 603) is applied may be based on the Quality of Service (QoS) that is presently available (see steps 601 and 602) on downlink to the client.

E.g. the calculated values of the "fraction lost" field within a Sender and/or Receiver report block of the RTCP feedback messages (see RFC 3500, section 6.4, may be evaluated and taken as an indication of the present QoS on the uplink and downlink, respectively. Alternatively, also explicitly negotiated QoS measurements may be provided from the mobile communication system. If for example the indicated QoS on the uplink is high, i.e. this may mean that it is likely that the RTCP feedback of the client is not lost though transmitted using an unreliable transport protocol. Thus, the client may decide that a lower reporting redundancy than configured by the server may be sufficient. In this case, the client may decide to apply thinning to the Loss RLE report blocks. Thus, step 605 is similar to step 505 in Fig. 5 except for the client may no longer guarantee a minimum reporting redundancy if thinning has been applied.

In another embodiment of the invention, the client may even decide to reduce the minimum number of retransmissions based on the QoS available. In this case, the client could consider not to include all General NACK report blocks to the feedback but to only report on the latest, newer packets in a manner similar as described for steps 507, 508, 509 and 511 of Fig. 5.

Another embodiment of the invention relates to the implementation of the above described various embodiments of the invention. It is recognized that the various above mentioned methods as well as the various logical blocks of the figures described above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention, variations thereof and solutions for QoS-aware scheduling may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

**Claims**

1. A method for providing RTCP feedback messages for data packets of at least one streaming session from a client (101) to a streaming server (100), wherein the at least one streaming session is provided using a RTP protocol and the RTCP protocol, and wherein a RTCP bandwidth, being a fraction of the available streaming session bandwidth, is allocated to said RTCP feedback messages, the method comprising the steps of:

   receiving session description information at the client (101), wherein the session description information is indicative of the RTCP bandwidth for said RTCP feedback messages, a minimum number of retransmissions to be enabled within said client buffering time, a minimum reporting redundancy for lost data packets of said at least one streaming session and said client buffering time,
   determining (401, 402, 403) the maximum number of retransmissions for a data packet based on said client buffering time and a RTCP report interval, wherein the RTCP report interval depends on an average RTCP feedback message size and the RTCP bandwidth allocated to the client (101),
   determining (404) whether the maximum number of retransmissions is larger than or equal to said minimum number of retransmissions,
   if so:

      adding (406) a number of General NACK report blocks to a RTCP feedback packet for requesting the retransmission of lost data packets, wherein the number of General NACK report blocks added to the RTCP feedback packet enables said minimum number of retransmissions of said lost data packets within said client buffering time,
      determining (409) the maximum RTCP feedback message size that is allowable under consideration of the allocated RTCP bandwidth, the client buffering time and said minimum number of retransmissions,
      determining (402) an resulting average RTCP feedback message size based on the average size of previously sent RTCP feedback message and the size of the RTCP packet comprising said number of General NACK report blocks,
      adding (505, 510) a number of Loss RLE report blocks to said RTCP feedback packet for reporting on said lost data packets, if the size of the resulting RTCP feedback packet does not exceed said maximum RTCP feedback message size, and
      transmitting (506) the RTCP feedback packet as an RTCP feedback message from the client (101) to the streaming server (100).

2. The method according to claim 1, wherein said number of Loss RLE report blocks is run-length encoded (502) prior to determining, if the size of the resulting RTCP feedback packet including the run-length encoded Loss RLE report blocks does not exceed said maximum RTCP feedback message size.

3. The method according to claim 1 or 2, wherein the method further comprises the step of reducing the minimum reporting redundancy configured by the session description information by the client.

4. The method according to claim 3, further comprising the step of determining (602) the uplink quality of service that is provided for packets of said streaming session and
   wherein the minimum reporting redundancy is reduced, if said determined quality of service is above a predetermined threshold level.

5. The method according to claim 3 or 4, wherein the reporting redundancy is reduced by the client by reducing the size of said number of Loss RLE report blocks.

6. The method according to one of claims 3 to 5, wherein the data of the streaming session comprises a basic data layer providing a basic streaming media quality and at least one enhancement layer enhancing the basic streaming media quality,
   wherein the step of reducing size of said number of Loss RLE report blocks comprises including only information related to data packets that comprise data of said basic data layer to within said Loss RLE report blocks.

7. The method according to claim 6, wherein the data of the at least one streaming session is an MPEG stream and the basic data layer comprises I-frames and the at least one enhancement layer comprises P-frames and/or B-frames.

8. The method according to claim 6 or 7, the method further comprising the step of determining whether a lost data packet comprises data of the basic data layer based on data packets already received at the client.

9. The method according to one of claims 3 to 8, wherein the size of said number of Loss RLE report blocks is reduced by thinning (603).

10. The method according to one of claims 3 to 8, wherein the size of said number of Loss RLE report blocks is reduced by reducing (507, 508, 509, 511) said number of Loss RLE report blocks being reported in said RTCP feedback packet.

11. The method according to claim 1 or 2, wherein the number of Loss RLE report blocks to be added to said RTCP feedback packet enables said minimum reporting redundancy of said lost packets.

12. The method according to one of claims 1 to 11, wherein a MIME type parameter of the streamed session indicates the packet rate.

13. The method according to one of claims 1 to 12, further comprising the step of determining which data packets of said at least one streaming session are lost based on sequence numbers of data packets received at the client.

14. A method for providing RTCP feedback messages for data packets of at least one streaming session from a client (101) to a streaming server (100),
wherein the at least one streaming session is provided using a RTP protocol and the RTCP protocol, the method comprising the steps of:

   determining, if the maximum number of retransmissions for a data packet that is providable within session constraints of the streaming session is larger than a minimum number of retransmissions to be enabled by the client,
   if so, adding a number of General NACK report blocks to a RTCP feedback packet for requesting the retransmission of lost data packets, wherein the number of General NACK report blocks added to the RTCP feedback packet enables said minimum number of retransmissions of said lost data packets within a client buffering time,
   determining the maximum RTCP feedback message size that is allowable in view of said session constraints,
   adding a number of Loss RLE report blocks to said RTCP feedback packet for reporting on lost and received data packets, such that size of the resulting RTCP feedback packet does not exceed said maximum RTCP feedback message size, and
   transmitting the RTCP feedback packet as an RTCP feedback message from the client (101) to the streaming server (100).

15. The method according to claim 14, further comprising the steps calculating a payload margin in the RTCP feedback packet based on the size of the determined maximum RTCP feedback message size and the size of the General NACK report blocks and
determining the number of Loss RLE report blocks fitting into that payload margin to ensure that the resulting RTCP feedback packet does not exceed said maximum RTCP feedback message size when adding said number of Loss RLE report blocks to said RTCP feedback packet.

16. A client for a mobile communication system transmitting RTCP feedback messages for data packets of at least one streaming session from a client to a streaming server, wherein the at least one streaming session is provided using a RTP protocol and the RTCP protocol, and wherein a RTCP bandwidth, being a fraction of the available streaming session bandwidth, is allocated to said RTCP feedback messages, the client comprising:

   a receiver for receiving session description information, wherein the session description information is indicative of the RTCP bandwidth for said RTCP feedback messages, a minimum number of retransmissions to be enabled within said client buffering time, a minimum reporting redundancy for lost data packets of said at least one streaming session and said client buffering time,
   processing means for determining (401, 402, 403) the maximum number of retransmissions for a data packet based on said client buffering time and a RTCP report interval, wherein the RTCP report interval depends on an average RTCP feedback message size and the RTCP bandwidth allocated to the client (101), and for determining (404) whether the maximum number of retransmissions is larger than or equal to said minimum number of retransmissions,
wherein the processing means is further adapted to

add (406) a number of General NACK report blocks to a RTCP feedback packet for requesting the retransmission of lost data packets, wherein the number of General NACK report blocks added to the RTCP feedback packet enables said minimum number of retransmissions of said lost data packets within said client buffering time,
to determine (409) the maximum RTCP feedback message size that is allowable under consideration of the allocated RTCP bandwidth, the client buffering time and said minimum number of retransmissions,
to determine (402) an resulting average RTCP feedback message size based on the average size of previously sent RTCP feedback message and the size of the RTCP packet comprising said number of General NACK report blocks, and
to add (505, 510) a number of Loss RLE report blocks to said RTCP feedback packet for reporting on said lost data packets, if the size of the resulting RTCP feedback packet does not exceed said maximum RTCP feedback message size,

if the maximum number of retransmissions is larger than or equal to said minimum number of retransmissions and the client (101) further comprises a transmitter for transmitting (506) the RTCP feedback packet as an RTCP feedback message to the streaming server (100).

17. The client according to claim 16, further comprising means adapted to perform the method according to one of claims 2 to 13.

18. A computer readable medium storing instruction that, when executed by a processor of a client in a mobile communication system, cause the client to provide RTCP feedback messages for data packets of at least one streaming session from a client (101) to a streaming server (100), wherein the at least one streaming session is provided using a RTP protocol and the RTCP protocol, and wherein a RTCP bandwidth, being a fraction of the available streaming session bandwidth, is allocated to said RTCP feedback messages, by:

receiving session description information at the client (101), wherein the session description information is indicative of the RTCP bandwidth for said RTCP feedback messages, a minimum number of retransmissions to be enabled within said client buffering time, a minimum reporting redundancy for lost data packets of said at least one streaming session and said client buffering time,
determining (401, 402, 403) the maximum number of retransmissions for a data packet based on said client buffering time and a RTCP report interval, wherein the RTCP report interval depends on an average RTCP feedback message size and the RTCP bandwidth allocated to the client (101),
determining (404) whether the maximum number of retransmissions is larger than or equal to said minimum number of retransmissions,
if so:

adding (406) a number of General NACK report blocks to a RTCP feedback packet for requesting the retransmission of lost data packets, wherein the number of General NACK report blocks added to the RTCP feedback packet enables said minimum number of retransmissions of said lost data packets within said client buffering time,
determining (409) the maximum RTCP feedback message size that is allowable under consideration of the allocated RTCP bandwidth, the client buffering time and said minimum number of retransmissions,
determining (402) an resulting average RTCP feedback message size based on the average size of previously sent RTCP feedback message and the size of the RTCP packet comprising said number of General NACK report blocks,
adding (505, 510) a number of Loss RLE report blocks to said RTCP feedback packet for reporting on said lost data packets, if the size of the resulting RTCP feedback packet does not exceed said maximum RTCP feedback message size, and
transmitting (506) the RTCP feedback packet as an RTCP feedback message from the client (101) to the streaming server (100).

19. The computer readable medium according to claim 18, further storing instructions that, when executed by the processor of the client, cause the client to perform the method according to one of claims 2 to 13.

**20.** A system comprising a streaming server providing at least one streaming session to a client, wherein the at least one streaming session is provided using a RTP protocol and the RTCP protocol, and wherein the client is according to claim 16 or 17.

**Patentansprüche**

**1.** Verfahren zum Bereitstellen von RTCP-Feedback-Nachrichten für Datenpakete wenigstens einer Streaming-Session von einem Client (101) für einen Streaming-Server (100), wobei die wenigstens eine Streaming-Session unter Verwendung eines RTP-Protokolls sowie des RTCP-Protokolls bereitgestellt wird und eine RTCP-Bandbreite, die ein Teil der verfügbaren Bandbreite der Streaming-Session ist, den RTCP-Feedback-Nachrichten zugewiesen wird und das Verfahren die folgenden Schritte umfasst:

Empfangen von Session-Beschreibungsinformationen an dem Client (101), wobei die Session-Beschreibungsinformationen die RTCP-Bandbreite für die RTCP-Feedback-Nachrichten, eine minimale Anzahl von Sendewiederholungen, die innerhalb der Client-Buffer-Zeit ermöglicht werden, eine minimale Bericht-Redundanz für verlorengegangene Datenpakete der wenigstens einen Streaming-Session und die Client-Buffer-Zeit anzeigen, Bestimmen (401, 402, 403) der maximalen Anzahl von Sendewiederholungen für ein Datenpaket auf Basis der Client-Buffer-Zeit und eines RTCP-Berichtintervalls, wobei das RTCP-Berichtintervall von einer durchschnittlichen Größe von RTCP-Feedback-Nachrichten und der RTCP-Bandbreite abhängt, die dem Client (101) zugewiesen wird,
Bestimmen (404), ob die maximale Anzahl von Sendewiederholungen größer ist als oder genauso groß wie die minimale Anzahl von Sendewiederholungen,
wenn dies der Fall ist:

Hinzufügen (406) einer Anzahl von General-NACK-Bericht-Blöcken zum Anfordern einer Sendewiederholung verlorengegangener Datenpakete zu einem RTCP-Feedback-Paket, wobei die Anzahl von General-NACK-Bericht-Blöcken, die zu dem RTCP-Feedback-Paket hinzugefügt wird, die minimale Anzahl von Sendewiederholungen der verlorengegangenen Datenpakete innerhalb der Client-Buffer-Zeit ermöglicht,
Bestimmen (409) der maximalen Größe von RTCP-Feedback-Nachrichten, die unter Berücksichtigung der zugewiesenen RTCP-Bandbreite, der Client-Buffer-Zeit und der minimalen Anzahl von Sendewiederholungen zulässig ist,
Bestimmen (402) einer resultierenden durchschnittlichen Größe von RTCP-Feedback-Nachrichten auf Basis der durchschnittlichen Größe zuvor gesendeter RTCP-Feedback-Nachrichten und der Größe des RTCP-Paketes, das die Anzahl von General-NACK-Bericht-Blöcken umfasst,
Hinzufügen (505, 510) einer Anzahl von Loss-RLE-Bericht-Blöcken zum Berichten über die verlorengegangenen Datenpakete zu dem RTCP-Feedback-Paket, wenn die Größe des resultierenden RTCP-Feedback-Paketes die maximale Größe von RTCP-Feedback-Nachrichten nicht übersteigt, und
Senden (506) des RTCP-Feedback-Paketes als eine RTCP-Feedback-Nachricht von dem Client (101) zu dem Streaming-Server (100).

**2.** Verfahren nach Anspruch 1, wobei die Anzahl von Loss-RLE-Bericht-Blöcken Lauflängencodierung unterzogen wird (502), bevor bestimmt wird, ob die Größe des resultierenden RTCP-Feedback-Paketes einschließlich der Lauflängencodierung unterzogenen Loss-RLE-Berichtblöcke die maximale Größe von RTCP-Feedback-Nachrichten nicht übersteigt.

**3.** Verfahren nach Anspruch 1 oder 2, wobei das Verfahren des Weiteren den Schritt des Reduzierens der minimalen Bericht-Redundanz, die durch die Session-Beschreibungsinformationen konfiguriert wird, durch den Client umfasst.

**4.** Verfahren nach Anspruch 3, das des Weiteren den Schritt des Bestimmens (602) der Uplink-Dienstgüte umfasst, die für Pakete der Streaming-Session bereitgestellt wird, und
wobei die minimale Bericht-Redundanz reduziert wird, wenn die bestimmte Dienstgüte über einem vorgegebenen Schwellenwert liegt.

**5.** Verfahren nach Anspruch 3 oder 4, wobei die Bericht-Redundanz durch den Client reduziert wird, indem die Größe der Anzahl von Loss-RLE-Bericht-Blöcken reduziert wird.

**6.** Verfahren nach einem der Ansprüche 3 bis 5, wobei die Daten der Streaming-Session eine Basis-Datenschicht, die eine Basisqualität von Streaming-Media bereitstellt, und wenigstens eine Verbesserungsschicht zum Verbessern der Streaming-Media-Qualität umfasst,
wobei der Schritt des Reduzierens der Größe der Anzahl von Loss-RLE-Bericht-Blöcken umfasst, dass nur Informationen, die sich auf Datenpakete beziehen, die Daten der Basis-Datenschicht umfassen, in die Loss-RLE-Berichtblöcke integriert werden.

7. Verfahren nach Anspruch 6, wobei die Daten der wenigstens einen Streaming-Session ein MPEG-Stream sind und die Basis-Datenschicht I-Frames umfasst und die wenigstens eine Verbesserungsschicht P-Frames und/oder B-Frames umfasst.

8. Verfahren nach Anspruch 6 oder 7, wobei das Verfahren des Weiteren einen Schritt umfasst, in dem mit Hilfe von Datenpaketen, die bereits bei dem Client empfangen wurden, bestimmt wird, ob ein verlorengegangenes Datenpaket Daten der Basis-Datenschicht umfasst.

9. Verfahren nach einem der Ansprüche 3 bis 8, wobei die Größe der Anzahl von Loss-RLE-Bericht-Blöcken durch Ausdünnen (603) reduziert wird.

10. Verfahren nach einem der Ansprüche 3 bis 8, wobei die Größe der Anzahl von Loss-RLE-Bericht-Blöcken reduziert wird, indem die Anzahl von Loss-RLE-Bericht-Blöcken reduziert wird (507, 508, 509, 511), die in dem RTCP-Feedback-Paket berichtet werden.

11. Verfahren nach Anspruch 1 oder 2, wobei die Anzahl von Loss-RLE-Bericht-Blöcken, die zu dem RTCP-Feedback-Paket zu addieren sind, die minimale Bericht-Redundanz der verlorengegangenen Pakete ermöglicht.

12. Verfahren nach einem der Ansprüche 1 bis 11, wobei ein MIME-Parameter der Streaming-Session die Paket-Rate anzeigt.

13. Verfahren nach einem der Ansprüche 1 bis 12, das des Weiteren den Schritt umfasst, mit Hilfe von Sequenznummern der durch dem Client empfangenen Datenpakete bestimmt wird, welche Datenpaket der wenigstens einen Streaming-Session verlorengegangen sind.

14. Verfahren zum Bereitstellen von RTCP-Feedback-Nachrichten für Datenpakete wenigstens einer Streaming-Session von einem Client (101) für einen Streaming-Server (100), wobei die wenigstens eine Streaming-Session unter Verwendung eines RTP-Protokolls sowie des RTCP-Protokolls bereitgestellt wird und das Verfahren die folgenden Schritte umfasst:

Bestimmen, ob die maximale Anzahl von Sendewiederholungen für ein Datenpaket, die innerhalb von Session-Einschränkungen der Streaming-Session bereitgestellt werden kann, größer ist als eine minimale Anzahl von Sendewiederholungen, die durch den Client ermöglicht wird,
wenn dies der Fall ist, Hinzufügen einer Anzahl von General-NACK-Bericht-Blöcken zum Anfordern einer Sendewiederholung verlorengegangener Datenpakete zu einem RTCP-Feedback-Paket, wobei die Anzahl von General-NACK-Bericht-Blöcken, die zu dem RTCP-Feedback-Paket hinzugefügt wird, die minimale Anzahl von Sendewiederholungen der verlorengegangenen Datenpakete innerhalb einer Client-Bufferzeit ermöglicht,
Bestimmen der maximalen Größe von RTCP-Feedback-Nachrichten, die in Anbetracht der Session-Einschränkungen zulässig ist,
Hinzufügen einer Anzahl von Loss-RLE-Bericht-Blöcken zu dem RTCP-Feedback-Paket, um über verlorengegangene und empfangene Datenpakete zu berichten, so dass die Größe des resultierenden RTCP-Feedback-Paketes die maximale Größe von RTCP-Feedback-Nachrichten nicht übersteigt, und
Senden des RTCP-Feedback-Paketes als eine RTCP-Feedback-Nachricht von dem Client (101) zu dem Streaming-Server (100).

15. Verfahren nach Anspruch 14, das des Weiteren die Schritte des Berechnens einer Nutzlast-Grenze in dem RTCP-Feedback-Paket auf Basis der Größe der bestimmten maximalen Größe von RTCP-Feedback-Nachrichten und der Größe der General-NACK-Bericht-Blöcke, sowie
des Bestimmens der Anzahl von Loss-RLE-Bericht-Blöcken umfasst, die in diese Nutzlast-Grenze passen, um zu gewährleisten, dass das resultierende RTCP-Feedback-Paket die maximale Größe von RTCP-Feedback-Nachrichten nicht übersteigt, wenn die Anzahl von Loss-RLE-Bericht-Blöcken zu dem RTCP-Feedback-Paket hinzugefügt wird.

**16.** Client für ein Mobilkommunikationssystem, der RTCP-Feedback-Nachrichten für Datenpakete wenigstens einer Streaming-Session von einem Client zu einem Streaming-Server sendet, wobei die wenigstens eine Streaming-Session unter Verwendung eines RTP-Protokolls sowie des RTCP-Protokolls bereitgestellt wird und eine RTCP-Bandbreite, die ein Teil der verfügbaren Bandbreite der Streaming-Session ist, den RTCP-Feedback-Nachrichten zugewiesen wird und der Client umfasst:

einen Empfänger zum Empfangen von Session-Beschreibungsinformationen, wobei die Session-Beschreibungsinformation die RTCP-Bandbreite für die RTCP-Feedback-Nachrichten, eine minimale Anzahl von Sendewiederholungen, die innerhalb der Client-Bufferzeit ermöglicht wird, eine minimale Bericht-Redundanz für verlorengegangene Datenpakete der wenigstens einen Streaming-Session und die Client-Bufferzeit anzeigen, eine Verarbeitungseinrichtung, die die maximale Anzahl von Sendewiederholungen für ein Datenpaket auf Basis der Client-Pufferzeit und eines RTCP-Berichtintervalls bestimmt (401, 402, 403), wobei das RTCP-Berichtintervall von einer durchschnittlichen Größe von RTCP-Feedback-Nachrichten und der RTCP-Bandbreite abhängt, die dem Client (101) zugewiesen wird, und die bestimmt (404), ob die maximale Anzahl von Sendewiederholungen größer ist als oder genauso groß wie die minimale Anzahl von Sendewiederholungen, wobei die Verarbeitungseinrichtung des Weiteren so eingerichtet ist, dass sie eine Anzahl von General-NACK-Bericht-Blöcken zum Anfordern einer Sendewiederholung verlorengegangener Datenpakete zu einem RTCP-Feedback-Paket hinzuzufügen (406), wobei die Anzahl von General-NACK-Bericht-Blöcken, die zu dem RTCP-Feedback-Paket hinzugefügt wird, die minimale Anzahl von Sendewiederholungen der verlorengegangenen Datenpakete innerhalb der Client-Bufferzeit ermöglicht, die maximale Größe von RTCP-Feedback-Nachrichten bestimmt (409), die unter Berücksichtigung der zugewiesenen RTCP-Bandbreite, der Client-Bufferzeit und der minimalen Anzahl von Sendewiederholungen zulässig ist, eine resultierende durchschnittliche Größe von RTCP-Feedback-Nachrichten auf Basis der durchschnittlichen Größe zuvor gesendeter RTCP-Feedback-Nachrichten und der Größe des RTCP-Paketes bestimmt (402), das die Anzahl von General-NACK-Bericht-Blöcken umfasst, und eine Anzahl von Loss-RLE-Bericht-Blöcken zu dem RTCP-Feedback-Paket zum Berichten über die verlorengegangenen Datenpakete hinzufügt (505, 510), wenn die Größe des resultierenden RTCP-Feedback-Paketes die maximale Größe von RTCP-Feedback-Nachrichten nicht übersteigt, wenn die maximale Anzahl von Sendewiederholungen größer ist als oder genauso groß wie die minimale Anzahl von Sendewiederholungen, und der Client (101) des Weiteren einen Sender zum Senden (506) des RTCP-Feedback-Paketes als eine RTCP-Feedback-Nachricht zu dem Streaming-Server (100) umfasst.

**17.** Client nach Anspruch 16, der des Weiteren eine Einrichtung umfasst, die zum Durchführen des Verfahrens nach einem der Ansprüche 2 bis 13 eingerichtet ist.

**18.** Computerlesbares Medium, das Befehle speichert, die, wenn sie von einem Prozessor eines Clients in einem Mobil-Kommunikationssystem ausgeführt werden, den Client veranlassen, RTCP-Feedback-Nachrichten für Datenpakete wenigstens einer Streaming-Session von einem Client (101) einem Streaming-Server (100) bereitzustellen, wobei die wenigstens eine Streaming-Session unter Verwendung eines RTP-Protokolls sowie des RTCP-Protokolls bereitgestellt wird und eine RTCP-Bandbreite, die ein Bruchteil der verfügbaren Bandbreite der Streaming-Session ist, den RTCP-Feedback-Nachrichten zugewiesen wird, indem Session-Beschreibungsinformationen an dem Client (101) empfangen werden, wobei die Session-Beschreibungsinformationen die RTCP-Bandbreite für die RTCP-Feedback-Nachrichten, eine minimale Anzahl an Sendewiederholungen, die innerhalb der Client-Pufferzeit ermöglicht werden, eine minimale Bericht-Redundanz für verlorengegangene Datenpakete der wenigstens einen Streaming-Session und die Client-Bufferzeit anzeigen, die maximale Anzahl von Sendewiederholungen für ein Datenpaket auf Basis der Client-Bufferzeit und eines RTCP-Berichtintervalls bestimmt wird (401, 402, 403), wobei das RTCP-Berichtintervall von einer durchschnittlichen Größe von RTCP-Feedback-Nachrichten und der RTCP-Bandbreite abhängt, die dem Client (101) zugewiesen wird, bestimmt wird (404), ob die maximale Anzahl von Sendewiederholungen größer ist als oder genauso groß wie die minimale Anzahl von Sendewiederholungen, wenn dies der Fall ist:

eine Anzahl von General-NACK-Bericht-Blöcken zum Anfordern einer Sendewiederholung verlorengegangener Datenpakete zu einem RTCP-Feedback-Paket hinzugefügt wird (406), wobei die Anzahl von General-NACK-Bericht-Blöcken, die zu dem RTCP-Feedback-Paket hinzugefügt wird, die minimale Anzahl von Sendewiederholungen der verlorengegangenen Datenpakete innerhalb der Client-Bufferzeit ermöglicht, die maximale Größe von RTCP-Feedback-Nachrichten bestimmt wird (409), die unter Berücksichtigung der zugewiesenen RTCP-Bandbreite, der Client-Pufferzeit und der minimalen Anzahl von Sendewiederholungen zulässig ist,

eine resultierende durchschnittliche Größe der RTCP-Feedback-Nachrichten auf Basis der durchschnittlichen Größe einer zuvor gesendeten RTCP-Feedback-Nachricht und der Größe des RTCP-Paketes bestimmt wird (402), das die Anzahl von General-NACK-Berichtblöcken umfasst,

eine Anzahl von Loss-RLE-Bericht-Blöcken zum Berichten über die verlorengegangenen Datenpakete zu dem RTCP-Feedback-Paket hinzugefügt wird (505, 510), wenn die Größe des resultierenden RTCP-Feedback-Paketes die maximale Größe von RTCP-Feedback-Nachrichten nicht übersteigt, und

das RTCP-Feedback-Paket als eine RTCP-Feedback-Nachricht von dem Client (101) zu dem Streaming-Server (100) gesendet wird (506).

19. Computerlesbares Medium nach Anspruch 18, das des Weiteren Befehle speichert, die, wenn sie durch den Prozessor des Client ausgeführt werden, den Client veranlassen, das Verfahren nach einem der Ansprüche 2 bis 13 durchzuführen.

20. System, das einen Streaming-Server umfasst, der wenigstens eine Streaming-Session für einen Client bereitstellt, wobei die wenigstens eine Streaming-Session unter Verwendung eines RTP-Protokolls und des RTCP-Protokolls bereitgestellt wird und der Client Anspruch 16 oder Anspruch 17 entspricht.

**Revendications**

1. Procédé de fourniture de messages de feed-back RTCP pour paquets de données d'au moins une session de diffusion en continu d'un client (101) à un serveur (100) de diffusion en continu, dans lequel l'au moins une session de diffusion en continu est fournie en utilisant un protocole RTP et le protocole RTCP, et

dans lequel une largeur de bande RTCP, étant une fraction de la largeur de bande disponible de la session de diffusion en continu, est attribuée auxdits messages de feed-back RTCP, le procédé comprenant les étapes consistant à :

recevoir des informations de description de session au niveau du client (101), dans laquelle les informations de description de session indiquent la largeur de bande RTCP pour lesdits messages de feed-back RTCP, un nombre minimum de retransmissions à permettre pendant ledit temps de mise en tampon du client, une redondance minimum de rapport pour les paquets de données perdus de ladite au moins une session de diffusion en continu et ledit temps de mise en tampon du client,

déterminer (401, 402, 403) le nombre maximum de retransmissions pour un paquet de données en fonction dudit temps de mise en tampon du client et d'un intervalle de rapport RTCP, dans laquelle l'intervalle de rapport RTCP dépend d'une taille moyenne du message de feed-back RTCP et de la largeur de bande RTCP attribuée au client (101),

déterminer (404) si le nombre maximum de retransmissions est supérieur ou égal audit nombre minimum de retransmissions,

si c'est le cas :

ajouter (406) un nombre de blocs de rapport General (NACK) à un paquet de feed-back RTCP pour demander la retransmission des paquets de données perdus, dans laquelle le nombre de blocs de rapport General NACK ajoutés au paquet de feed-back RTCP permet ledit nombre minimum de retransmissions des paquets de données perdus pendant ledit temps de mise en tampon du client,

déterminer (409) la taille maximum du message de feed-back RTCP qui peut être permise en tenant compte de la largeur de bande RTCP attribuée, du temps de mise en tampon du client et dudit nombre minimum de retransmissions,

déterminer (402) une taille moyenne du message de feed-back RTCP qui en résulte en fonction de la taille moyenne du message de feed-back RTCP envoyé antérieurement et de la taille du paquet RTCP comprenant ledit nombre de blocs de rapport General NACK,

ajouter (505, 510) un nombre de blocs de rapport Loss RLE audit paquet de feed-back RTCP pour le rapport desdits paquets de données perdus, si la taille du paquet de feed-back RTCP qui en résulte ne dépasse pas ladite taille maximum de message de feed-back RTCP, et

transmettre (506) le paquet de feed-back RTCP en tant que message de feed-back RTCP du client (101) au serveur (100) de diffusion en continu.

**2.** Procédé selon la revendication 1, dans lequel ledit nombre de blocs de rapport Loss RLE est codé (502) par codage par répétition (run-length encoded) avant de déterminer si la taille du paquet de feed-back RTCP qui en résulte comprenant les blocs de rapport Loss RLE codés par codage par répétition ne dépasse pas la taille maximum de message de feed-back RTCP.

**3.** Procédé selon la revendication 1 ou 2, dans lequel le procédé comprend de plus l'étape de réduction de la redondance minimum de rapport configurée par les informations de description de session par le client.

**4.** Procédé selon la revendication 3, comprenant de plus l'étape de détermination (602) de la qualité de liaison montante du service qui est fourni pour les paquets de ladite session de diffusion en continu et
dans lequel la redondance minimum de rapport est réduite, si ladite qualité de service déterminée est supérieure à un niveau de seuil prédéterminé.

**5.** Procédé selon la revendication 3 ou 4, dans lequel la redondance de rapport est réduite par le client en réduisant la taille dudit nombre de blocs de rapport Loss RLE.

**6.** Procédé selon l'une des revendications 3 à 5, dans lequel les données de la session de diffusion en continu comprennent une couche de données de base fournissant une qualité de média de diffusion en continu de base et au moins une couche d'amélioration pour améliorer la qualité de média de diffusion en continu de base,
dans lequel l'étape de réduction de la taille dudit nombre de blocs de rapport Loss RLE comprend inclure uniquement les informations relatives aux paquets de données qui comprennent les données de ladite couche de données de base à l'intérieur desdits blocs de rapport Loss RLE.

**7.** Procédé selon la revendication 6, dans lequel les données de l'au moins une session de diffusion en continu sont un flux MPEG et la couche de données de base comprend des trames I et l'au moins une couche d'amélioration comprend des trames P et/ou des trames B.

**8.** Procédé selon la revendication 6 ou 7, le procédé comprenant de plus l'étape de détermination si un paquet de données perdu comprend les données de la couche de données de base en fonction des paquets de données déjà reçus au niveau du client.

**9.** Procédé selon l'une des revendications 3 à 8, dans lequel la taille dudit nombre de blocs de rapport Loss RLE est réduite par amincissement (603).

**10.** Procédé selon l'une des revendications 3 à 8, dans lequel la taille dudit nombre de blocs de rapport Loss RLE est réduite en réduisant (507, 508, 509, 511) ledit nombre de blocs de rapport Loss RLE étant rapporté dans ledit paquet de feed-back RTCP.

**11.** Procédé selon la revendication 1 ou 2, dans lequel le nombre de blocs de rapport Loss RLE à ajouter audit paquet de feed-back RTCP permet ladite redondance minimum de rapport desdits paquets perdus.

**12.** Procédé selon l'une des revendications 1 à 11, dans lequel un paramètre de type MIME de la session diffusée en continu indique le débit de paquet.

**13.** Procédé selon l'une des revendications 1 à 12, comprenant de plus l'étape consistant à déterminer quels paquets de données de ladite au moins une session de diffusion en continu sont perdus en fonction de numéros de séquence de paquets de données reçus au niveau du client.

**14.** Procédé de fourniture de messages RTCP de feed-back pour paquets de données d'au moins une session de diffusion en continu d'un client (101) à un serveur (100) de diffusion en continu, dans lequel l'au moins une session de diffusion en continu est fournie en utilisant un protocole RTP et le protocole RTCP, le procédé comprenant les étapes consistant à :

déterminer, si le nombre maximum de retransmissions pour un paquet de données qui peut être fourni dans des contraintes de session de la session de diffusion en continu est supérieur au nombre minimum de retransmissions à permettre par le client,
si c'est le cas, ajouter un nombre de blocs de rapport General NACK à un paquet de feed-back RTCP pour demander la retransmission de paquets de données perdus, dans laquelle le nombre de blocs de rapport General NACK ajoutés au paquet de feed-back RTCP permet ledit nombre minimum de retransmissions desdits paquets de données perdus pendant un temps de mise en tampon du client,

déterminer la taille maximum du message de feed-back RTCP qui peut être autorisée aux vues desdites contraintes de session,

ajouter un nombre de blocs de rapport Loss RLE audit paquet de feed-back RTCP pour le rapport des paquets de données reçus et perdus, de sorte que la taille du paquet de feed-back qui en résulte ne dépasse pas ladite taille maximum du message RTCP de feed-back, et

transmettre le paquet de feed-back RTCP en tant que message de feed-back RTCP du client (101) au serveur (100) de diffusion en continu.

15. Procédé selon la revendication 14, comprenant de plus les étapes de calcul d'une marge de charge utile dans le paquet de feed-back RTCP en fonction de la taille de la taille maximum du message de feed-back RTCP déterminée et de la taille des blocs de rapport General NACK et

détermination du nombre de blocs de rapport Loss RLE entrant dans les limites de cette marge de charge utile pour garantir que ce paquet de feed-back RTCP qui en résulte ne dépasse pas ladite taille maximum du message de feed-back RTCP lors de l'ajout dudit nombre de blocs de rapport Loss RLE audit paquet de feed-back RTCP.

16. Client pour un système mobile de communication transmettant des messages de feed-back RTCP pour des paquets de données d'au moins une session de diffusion en continu d'un client à un serveur de diffusion en continu, dans lequel l'au moins une session de diffusion en continu est fournie en utilisant un protocole RTP et le protocole RTCP, et dans lequel une largeur de bande RTCP, étant une fraction de la largeur de bande disponible de la session de diffusion en continu, est attribuée auxdits messages de feed-back RTCP, le client comprenant :

un récepteur pour recevoir des informations de description de session, dans lequel les informations de description de session indiquent la largeur de bande RTCP pour lesdits messages de feed-back RTCP, un nombre minimum de retransmissions à permettre pendant ledit temps de mise en tampon du client, une redondance minimum de rapport pour les paquets de données perdus de ladite au moins une session de diffusion en continu et ledit temps de mise en tampon du client,

un moyen de traitement pour déterminer (401, 402, 403) le nombre maximum de retransmissions pour un paquet de données en fonction dudit temps de mise en tampon du client et d'un intervalle de rapport RTCP, dans lequel l'intervalle de rapport RTCP dépend d'une taille moyenne de message de feed-back RTCP et de la largeur de bande RTCP attribuée au client (101), et pour déterminer (404) si le nombre maximum de retransmissions est supérieur ou égal audit nombre minimum de retransmissions,

dans lequel le moyen de traitement est de plus adapté pour

ajouter (406) un nombre de blocs de rapport General NACK à un paquet de feed-back RTCP pour demander la retransmission des paquets de données perdus, dans lequel le nombre de blocs de rapport General NACK ajoutés au paquet de feed-back RTCP permet ledit nombre minimum de retransmissions desdits paquets de données perdus pendant ledit temps de mise en tampon du client,

déterminer (409) la taille maximum du message de feed-back RTCP qui peut être permise en tenant compte de la largeur de bande RTCP attribuée, du temps de mise en tampon du client et dudit nombre minimum de retransmissions,

déterminer (402) une taille moyenne du message de feed-back RTCP qui en résulte en fonction de la taille moyenne du message de feed-back RTCP envoyé antérieurement et de la taille du paquet RTCP comprenant ledit nombre de blocs de rapport General NACK, et

ajouter (505, 510) un nombre de blocs de rapport Loss RLE audit paquet de feed-back RTCP pour le rapport desdits paquets de données perdus, si la taille du paquet de feed-back RTCP qui en résulte ne dépasse pas ladite taille maximum de message de feed-back RTCP,

si le nombre maximum de retransmissions est supérieur ou égal audit nombre minimum de retransmissions et le client (101) comprend de plus un émetteur pour transmettre (506) le paquet de feed-back RTCP en tant que message de feed-back RTCP au serveur (100) de diffusion en continu.

17. Client selon la revendication 16, comprenant de plus un moyen adapté pour réaliser le procédé selon l'une des revendications 2 à 13.

18. Support lisible par ordinateur stockant des instructions qui, lorsqu'elles sont exécutées par un processeur d'un client dans un système mobile de communication, amènent le client à fournir des messages de feed-back RTCP pour des paquets de données d'au moins une session de diffusion en continu d'un client (101) à un serveur (100) de diffusion en continu, dans laquelle l'au moins une session de diffusion en continu est fournie en utilisant un protocole RTP et le protocole RTCP, et dans laquelle une largeur de bande RTCP, étant une fraction de la largeur de bande disponible de la session de diffusion en continu, est attribuée auxdits messages de feed-back RTCP, par les étapes consistant à :

recevoir des informations de description de session au niveau du client (101), dans laquelle les informations de description de session indiquent la largeur de bande RTCP pour lesdits messages de feed-back RTCP, un nombre minimum de retransmissions à permettre pendant ledit temps de mise en tampon du client, une redondance minimum de rapport pour les paquets de données perdus de ladite au moins une session de diffusion en continu et ledit temps de mise en tampon du client,

déterminer (401, 402, 403) le nombre maximum de retransmissions pour un paquet de données en fonction dudit temps de mise en tampon du client et d'un intervalle de rapport RTCP, dans laquelle l'intervalle de rapport RTCP dépend d'une taille moyenne de message de feed-back RTCP et de la largeur de bande attribuée au client (101),

déterminer (404) si le nombre maximum de retransmissions est supérieur ou égal audit nombre minimum de retransmissions,

si c'est le cas :

ajouter (406) un nombre de blocs de rapport General NACK à un paquet de feed-back RTCP pour demander la retransmission des paquets de données perdus, dans laquelle le nombre de blocs de rapport General NACK ajoutés au paquet de feed-back RTCP permet ledit nombre minimum de retransmissions desdits paquets de données perdus pendant ledit temps de mise en tampon du client,

déterminer (409) la taille maximum du message de feed-back RTCP qui peut être permise en tenant compte de la largeur de bande RTCP attribuée, du temps de mise en tampon du client et dudit nombre minimum de retransmissions,

déterminer (402) une taille moyenne du message de feed-back RTCP qui en résulte en fonction de la taille moyenne du message de feed-back RTCP envoyé antérieurement et de la taille du paquet RTCP comprenant ledit nombre de blocs de rapport General NACK,

ajouter (505, 510) un nombre de blocs de rapport Loss RLE audit paquet de feed-back RTCP pour le rapport desdits paquets de données perdus, si la taille du paquet de feed-back RTCP qui en résulte ne dépasse pas ladite taille maximum du message de feed-back RTCP, et transmettre (506) le paquet de feed-back en tant que message de feed-back RTCP du client (101) au serveur (100) de diffusion en continu.

**19.** Support lisible par ordinateur selon la revendication 18, stockant de plus des instructions qui, lorsqu'elles sont exécutées par le processeur du client, amènent le client à réaliser le procédé selon l'une des revendications 2 à 13.

**20.** Système comprenant un serveur de diffusion en continu fournissant au moins une session de diffusion en continu à un client, dans lequel l'au moins une session de diffusion en continu est fournie en utilisant un protocole RTP et le protocole RTCP, et dans lequel le client est celui défini dans la revendication 16 ou 17.

Streaming Server

Internet

UMTS network 102

GGSN 105

CN 103

SGSN 106

RNC

Node B

Node B

RNC 107

Node B

Node B

UTRAN 104

100

Client

101

Fig. 1

EP 1 687 955 B1

Fig. 2

**Fig. 3**

from Fig. 4, 410

build a no. of R Loss RLE report
block(s) necessary for min.
redundancy reporting — 501

perform run-length compression
of built Loss RLE report blocks — 502

determine RLE_report_size of
compressed Loss RLE report blocks — 503

504 — RLE_report_size
≥
payload_margin

408

transmit current RTCP packet
with General NACK report block(s)

no

511 — R > 1

yes

507 — drop the Loss RLE report block
reporting on "oldest" packets
(R = R-1)

yes

505 — add Loss RLE report block(s)
to current RTCP packet to provide
min. reporting redundancy

no

506 — transmit current RTCP packet
with General NACK and
Loss RLE report blocks

508 — determine RLE_report_size of the
remaining Loss RLE report block(s)

509 — RLE_report_size
≥
payload_margin

yes

no

510 — add remaining Loss RLE report
block(s) to current RTCP packet

**Fig. 5**

**Fig. 6**

from Fig. 4, 410

build a no. of R Loss RLE report block(s) necessary for min. redundancy reporting — 501

perform run-length compression of built Loss RLE report blocks — 502

determine QoS provided on the link — 601

602 — QoS allows for reduction of the reporting redundancy → no

yes — 603

perform thinning of compressed Loss RLE report blocks — 603

determine RLE_report_size of compr./ thinned Loss RLE report blocks — 604

504 — RLE_report_size ≥ payload_margin

yes → drop the Loss RLE report block reporting on "oldest" packets (R = R-1) — 507

no

add Loss RLE report block(s) to current RTCP packet — 605

determine RLE_report_size of the remaining Loss RLE report block(s) — 508

509 — RLE_report_size ≥ payload_margin

yes

no → add remaining Loss RLE report block(s) to current RTCP packet — 510

transmit current RTCP packet with General NACK and Loss RLE report blocks — 506

511 — R > 1

no → transmit current RTCP packet with General NACK report block(s) — 408

yes

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHULZRINNE et al.** RTP: A Transport Protocol for Real-Time Applications. *RFC 3550,* July 2003
- **SCHULZRINNE et al.** RTP Profile for Audio and Video Conferences with Minimal Control. *RFC 3551,* July 2003
- **POSTEL.** User Datagram Protocol. *RFC 768,* August 1980

- **REY et al.** RTP Retransmission Format. *Internet Draft, IETF AVT Workgroup,* August 2003
- **OTT et al.** Extended RTP Profile for RTCP-based Feedback (RTP/AVPF. *internet Draft, IETF AVT Workgroup,* August 2004
- **FRIEDMAN et al.** RTP Control Protocol Extended Reports (RTCP XR. *RFC 3611,* November 2003